(19) Europäisches Patentamt
European Patent Office
Office européen des brevets

(11) **EP 4 631 582 A1**

(12) **EUROPEAN PATENT APPLICATION**
published in accordance with Art. 153(4) EPC

(43) Date of publication:
**15.10.2025 Bulletin 2025/42**

(21) Application number: **24819569.5**

(22) Date of filing: **05.06.2024**

(51) International Patent Classification (IPC):
$A62D\ 1/00^{(2006.01)}$ $\quad A62D\ 1/06^{(2006.01)}$
$A62C\ 35/02^{(2006.01)}$ $\quad A62C\ 3/16^{(2006.01)}$
$H01M\ 50/24^{(2021.01)}$ $\quad H01M\ 50/204^{(2021.01)}$

(52) Cooperative Patent Classification (CPC):
**A62C 3/16; A62C 35/02; A62D 1/00; A62D 1/06;
H01M 50/204; H01M 50/24**

(86) International application number:
**PCT/KR2024/007688**

(87) International publication number:
**WO 2024/253418 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.06.2023 KR 20230072165**

(71) Applicant: **LG CHEM, LTD.
Seoul 07336 (KR)**

(72) Inventors:
• **KIM, Jang Hwan
  Daejeon 34122 (KR)**
• **LEE, Seung Min
  Daejeon 34122 (KR)**
• **LEE, Hong Chan
  Daejeon 34122 (KR)**
• **JUNG, Jin Mi
  Daejeon 34122 (KR)**

(74) Representative: **Hoffmann Eitle
Patent- und Rechtsanwälte PartmbB
Arabellastraße 30
81925 München (DE)**

(54) **COMPOSITION**

(57) The present specification relates to a composition, a fire extinguishing device, and a use thereof. The present specification discloses a composition, a fire extinguishing device, and a use thereof, which can be applied to a product or element with a possibility of heat generation, ignition, and/or explosion during drive, storage, and/or maintenance processes to effectively respond to the heat generation, ignition, and/or explosion. The present specification discloses the composition that is substantially non-flammable and non-toxic, and a use thereof.

[Figure 1]

EP 4 631 582 A1

## Description

This application claims the benefit of priority based on Korean Patent Application No. 10-2023-0072165 dated June 5, 2023, the disclosure of which is incorporated herein by reference in its entirety.

The present specification discloses a composition, a fire extinguishing device, and a use thereof.

## Background Art

The importance of technology for processing heat generated from products becomes bigger and bigger, but treatment, maintenance, and control of heat in products composed of multiple heat-generating elements (heating elements) are difficult problems.

For example, it is very important to prevent a so-called TR (Thermal Runaway) or TP (Thermal Propagation) phenomenon occurring in a battery module or a battery pack. A battery module or a battery pack comprises a plurality of battery cells or a plurality of battery modules, which are positioned relatively adjacent to each other. In such a structure, the phenomenon in which abnormal heat generation, ignition, and/or explosion, and the like occurring in one battery cell and/or battery module is transmitted to other adjacent battery cells in a chain is called the TR or TP phenomenon. Chain ignition or chain explosion caused by such a TR or TP phenomenon must be managed in terms of safety.

To manage this TR or TP, and the like, a method of using a material with a fire extinguishing function can be considered.

For example, if a material with a fire extinguishing function is positioned adjacent to multiple products that generate heat, and the material with the fire extinguishing function exhibits the fire extinguishing function when the abnormal heat generation, ignition, and/or explosion has occurred, it can cope with the TR and TP phenomenon, and the like.

Depending on the product to which the fire extinguishing material is applied, it may be necessary to ensure that the fire extinguishing material is substantially maintained in a liquid phase in a low-temperature state. For example, a battery cell may experience a large volume expansion during a charging or use process, but if the adjacently present fire extinguishing material present is in a solid state when the volume expansion has occurred, it is not possible to effectively respond to stress caused by the volume expansion, and the like.

Also, if the fire extinguishing material is applied in the liquid phase and then exposed to a low-temperature environment to be converted to a solid phase, volume changes or hardness changes occur during the process, so that it can adversely affect adjacent products.

In addition, it may be advantageous that the fire extinguishing material vaporizes to perform the fire extinguishing function. For example, when water is used as the fire extinguishing material, if it is vaporized and converted to water vapor by heat generated during abnormal heating, ignition, and/or explosion, the fire extinguishing function can be performed quickly over a wider range. However, if water becomes a solid state such as ice in a low-temperature environment, the efficiency of the vaporization may be lowered.

However, it is not easy to make the fire extinguishing material exist in a liquid phase at a low temperature while expressing its fire extinguishing function in a timely manner. For example, water is a useful fire extinguishing material, as described above, but it can easily be converted to a solid phase at a low temperature because of its high freezing point.

## Disclosure

## Technical Problem

The present specification relates to a composition, a fire extinguishing device, and a use thereof. The composition may be a fire extinguishing composition. The present specification is intended to disclose a composition, a fire extinguishing device, and a use thereof, which can be applied to a product or element with a possibility of heat generation, ignition, and/or explosion during drive, storage, and/or maintenance processes to effectively respond to the heat generation, ignition, and/or explosion. For example, as the fire extinguishing composition or the fire extinguishing device is applied to an article including a plurality of the products or elements, it can respond to abnormal heat generation, explosion, and/or ignition occurring in one of the elements or products, and prevent or minimize propagation of such heat generation, explosion, and/or ignition to adjacent other elements or products.

The present specification is also intended to disclose a fire extinguishing composition that is substantially non-flammable and non-toxic, and a fire extinguishing device comprising the same.

The present specification is also intended to provide a use of the fire extinguishing device.

**Technical Solution**

The term room temperature means a natural temperature without warming or cooling, and for example, the room temperature may be any one temperature within a range of about 10°C to 30°C, or a temperature of about 23°C, about 25°C, or about 27°C or so.

Among physical properties mentioned in this specification, the physical property affected by the measurement temperature is a physical property measured at room temperature, unless otherwise specified.

The unit of temperature mentioned in this specification is Celsius (°C), unless otherwise specified.

The term normal pressure means a natural pressure without pressurization or depressurization, which may usually mean a pressure of about 730 mmHg to 790 mmHg or so.

Among physical properties mentioned in this specification, the physical property affected by the measurement pressure is a physical property measured at normal pressure, unless otherwise specified.

Among physical properties mentioned in this specification, the physical property affected by the measurement humidity is a physical property measured at standard-state humidity, unless otherwise specified.

The standard-state humidity means any one relative humidity within a range of 40% to 60%, for example, a relative humidity of about 55% or about 60% or so.

The present specification discloses a composition. The term composition may mean a mixture of two or more different components. The composition may be a fire extinguishing composition. The fire extinguishing composition is a composition capable of responding to abnormal heat generation, ignition, and explosion.

The term fire extinguishing mentioned in the present specification does not necessarily mean a function of extinguishing fire, but has a meaning including all functions of responding to abnormal heat generation, ignition, and/or explosion while including the function of extinguishing fire.

The term non-flammability mentioned in the present specification may mean that a target material does not have a flash point, which means a case where the flash point is 120°C or more, thereby having a flash point to the extent capable of responding to heat generation, ignition, and/or explosion.

In this specification, the term non-toxicity means environment- and human body-friendly cases because of less or absent emission of toxic gases.

The composition may be non-flammable, and be formulated to be environment- and human body-friendly.

For example, the composition may have a flammability rating of 0 or 1 according to the NFPA (National Fire Protection Association) 704 standard. The NFPA 704 standard is a standard announced by the US National Fire Protection Association (NFPA), which is a standard expressed as so-called fire diamonds created to enable rapid response to hazardous materials in emergency situations, and the flammability rating is indicated by a red area. The standard is classified into grades 0, 1, 2, 3, and 4, among which grade 0 means no flammability, and grade 1 is a case where it ignites when sufficiently heated, which is approximately a case where the flash point is 93°C or more. The evaluation method of such flammability ratings follows the NFPA (National Fire Protection Association) 704 standard.

The composition may exhibit non-flammability having a flammability rating of 0 or 1 according to the NFPA (National Fire Protection Association) 704 standard. For example, the composition may have a health hazard rating of 0, 1, or 2 according to the NFPA (National Fire Protection Association) 704 standard. The health hazard rating is indicated by a blue area in the fire diamonds of the NFPA 704 standard. The standard is classified into grades 0, 1, 2, 3, and 4, wherein grade 0 is a case where there is no health hazard and no special precautions are required, grade 1 is a case where there is a possibility of causing minor injury upon exposure, and grade 2 is a case where there is a possibility of causing temporary disability or injury upon continuous/normal contact, but not chronic contact.

In order that the composition exhibits the grade, each component constituting the composition may also use a material exhibiting the flammability and/or health hazard rating.

The composition comprises a solvent having a fire extinguishing function. In addition, the fire extinguishing composition may have a lower freezing point than the freezing point of the solvent. Vaporizable solvents to be described below generally exhibit an appropriate fire extinguishing function, but has a relatively high freezing point, whereby it is difficult to maintain the fire extinguishing composition in a liquid phase in a low-temperature environment. The present specification may provide a fire extinguishing composition having a low freezing point while comprising the vaporizable solvent in a sufficient amount through adjustment of the composition of the fire extinguishing composition.

The composition may comprise a solvent. Such a solvent has the fire extinguishing function. Therefore, the solvent may be used to reduce heat by heat exchange, and the like when the heat generation, ignition, and/or explosion has occurred in a target adjacent to the composition, or to remove a flame generated by the ignition and/or explosion. The solvent may correspond to a vaporizable solvent. The vaporizable solvent is a solvent capable of vaporizing under certain temperature and/or pressure conditions. The composition disclosed herein may appear at a time point when the vaporization of such a solvent is required, for example, a time point when the abnormal heat generation, ignition, and/or explosion occurs or is at risk of occurring, and may be formulated so that the form of the vaporization is in a form suitable for the abnormal heat generation, ignition, and/or explosion. The gas emitted to the outside by such vaporization may quickly exhibit the above-mentioned fire extinguishing function over a wider range.

As the vaporizable solvent, a solvent having a freezing point and/or a boiling point within a certain range may be used. The freezing point and boiling point mentioned in the present specification are the freezing point and boiling point under 1 atm, unless otherwise specified.

For example, the lower limit of the freezing point of the vaporizable solvent may be - 10°C, -8°C, -6°C, -5°C, -4°C, -3°C, -2°C, -1°C, or 0°C or so, and the upper limit thereof may be 10°C, 9°C, 8°C, 7°C, 6°C, 5°C, 4°C, 3°C, 2°C, or 1°C or so. The freezing point may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The vaporizable solvent may have a boiling point within a certain range to exhibit appropriate vaporability. For example, the lower limit of the boiling point of the vaporizable solvent may be 80°C, 85°C, 90°C, or 95°C or so, and the upper limit thereof may be 120°C, 115°C, 110°C, or 105°C or so. The boiling point may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. Such a freezing point and/or boiling point may be adjusted according to the applied use of the fire extinguishing device as described below.

As the vaporizable solvent, any appropriate type may be selected and used without special limitation if it has a freezing point and/or boiling point within the range. In addition, as the solvent, any type, which is non-flammable, or has little or no toxic gas emission, may be selected from known solvents.

A representative example of the vaporizable solvent having a freezing point and/or boiling point within the range is water, and accordingly, water may be used as the vaporizable solvent of the composition, but the type of applicable vaporizable solvent is not limited thereto.

For example, the lower limit of the content of the vaporizable solvent in the composition may be 10 wt%, 15 wt%, 20 wt%, 25 wt%, 30 wt%, 35 wt%, 40 wt%, 45 wt%, 50 wt%, or 55 wt% or so, and the upper limit thereof may be 95 wt%, 90 wt%, 85 wt%, 80 wt%, 75 wt%, 70 wt%, 65 wt%, or 60 wt% or so. The ratio may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The solvent included within such a range may effectively function under various exothermic, ignition, and/or explosive environments.

The fire extinguishing composition may exhibit a lower freezing point than the vaporizable solvent while comprising the vaporizable solvent.

For example, the lower limit of the freezing point of the fire extinguishing composition may be -60°C, -55°C, -50°C, -45°C, -40°C, -35°C, -30°C, or -25°C or so, and the upper limit thereof may be -20°C, -25°C, or -30°C or so. The freezing point may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. Through the freezing point within the range, the fire extinguishing composition is stably maintained in a liquid phase at a constant low temperature, whereby it is possible to respond to heat generation, ignition, and/or explosion effectively and quickly, and it is possible to prevent adverse effects on surrounding elements or products due to volume changes or hardness changes, and the like according to phase changes.

The composition may comprise additional components to secure the freezing point.

For example, the composition may comprise a freezing point adjuster.

The term freezing point adjuster may mean a component in which the freezing point of the fire extinguishing composition as described above is achieved depending on the presence of the component. There are various substances known to be capable of controlling the freezing point, but these substances may exhibit flammability or generate toxic gases. The composition disclosed herein may comprise a non-flammable and/or non-toxic freezing point adjuster.

The freezing point adjuster may be radically reactive. When energy such as heat is applied thereto, the freezing point adjuster may decompose and combine with active radicals of combustibles such as H free radicals or OH free radicals to form stable products. For example, when the freezing point adjuster is potassium carbonate ($K_2CO_3$), potassium formate (HCOOK), potassium acetate ($CH_3COOK$), and the like, which are described below, it forms potassium radicals (K*), and K* combines with OH, whereby it is possible to form a stable product such as KOH. In addition, the freezing point adjuster having such radical reactivity may effectively act against heat generation, ignition, and/or explosion.

Also, the freezing point adjuster may be a gas-generating freezing point adjuster. When heat is applied thereto, the freezing point adjuster may decompose to generate gas. In addition, the freezing point adjuster may also act as a gas-generating material to be described below.

In the freezing point adjuster of the present specification, the gas generated after the freezing point adjuster is exposed for 8 hours may be non-toxic. In order that the freezing point adjuster exhibits non-flammability and/or non-toxicity, a component without containing any specific functional groups may be used. The freezing point adjuster containing specific components or functional groups may be flammable and/or toxic, which may be included in the composition to form a flammable and/or toxic composition. Components containing the components or functional groups may generate known toxic gases, such as chlorine gas, ammonia gas, and gases containing halogen elements such as hydrofluoric acid. In the freezing point adjuster of the present specification, for example, components without containing a hydroxyl group and/or chlorine may be used, and components without containing any components that generate other sulfur dioxide gases, ammonia, and ethylene oxide, or generate the relevant components may be used. In addition, components without containing halogen elements such as hydrofluoric acid may be used.

The additive amount of the freezing point adjuster may be adjusted in consideration of the freezing point of the desired fire extinguishing composition and the form of vaporization when necessary. The freezing point adjuster may be present in an amount such that $\Delta T2$ of Equation 2 below is within a predetermined range.

[Equation 2]

$$\Delta T2 = 1.86 \times M2 \times I2$$

In Equation 2, M2 is the molal concentration of the freezing point adjuster included in the composition to the solvent. That is, the M2 is the number of moles of the freezing point adjuster per 1 kg of the solvent. In the case where the freezing point adjuster is an ionic compound, in Equation 2, I2 is the number of moles of ions generated when 1 mole of the ionic compound has been dissociated. In this instance, the dissociation means when the ionic compound is completely dissociated. When the freezing point adjuster is no ionic compound, the I2 is 1.

When two or more freezing point adjusters are present in the composition, the $\Delta T2$ is calculated for each freezing point adjuster, and the sum thereof is used as the $\Delta T2$ of Equation 2.

The $\Delta T2$ is selected in consideration of the desired freezing point and the form of vaporization when necessary. The lower limit of the $\Delta T2$ may be 5, 10, 15, or 20 or so, and the upper limit thereof may be 38, 35, 30, 25, 20, or 15 or so. The $\Delta T2$ may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. In such a range, the composition may be formulated so that while it is maintained in a liquid phase at a necessary time point, and vaporizes at a time point when the vaporization is required, the relevant vaporization may occur very quickly.

The lower limit of the weight part of the freezing point adjuster relative to 100 parts by weight of the vaporizable solvent may be 1 part by weight, 2 parts by weight, 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, 20 parts by weight, 21 parts by weight, 22 parts by weight, 23 parts by weight, 24 parts by weight, 25 parts by weight, 26 parts by weight, 27 parts by weight, 28 parts by weight, 29 parts by weight, 30 parts by weight, 35 parts by weight, 40 parts by weight, 45 parts by weight, 50 parts by weight, or 55 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, or 30 parts by weight or so. The ratio may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits.

As the freezing point adjuster, an ionic compound may be used. The category of ionic compounds referred to herein includes ionic substances in themselves, or substances capable of generating ions, such as salts.

The freezing point adjuster may be a non-flammable ionic compound or an ionic compound having a flash point of 120°C or more. The non-flammable ionic compound may mean a compound whose flash point is not confirmed when evaluated in the manner described in "12. Flammability evaluation" of Example sections in this specification. In addition, the flash point is also evaluated in the manner described in "12. Flammability evaluation." When the ionic compound has a flash point of 120°C or more, the upper limit of the flash point is not particularly limited. That is, since the ionic compound disclosed in this specification has a flash point of a certain level or more, and thus does not ignite upon abnormal heat generation, ignition and/or explosion, there is no limitation on the upper limit of the flash point, and for example, the upper limit of the flash point may be 1,000°C, or 500°C or so.

A non-flammable ionic compound or an ionic compound having a flash point of 120°C or more, which is applicable as the freezing point adjuster, may be exemplified by one or more selected from the group consisting of formates, acetates, carbonates, and sulfates. Specifically, for example, one or more of substances consisting of sodium acetate ($CH_3COONa$), sodium formate ($HCOONa$), potassium acetate ($CH_3COOK$), potassium formate ($HCOOK$), calcium formate (($HCOO)_2Ca$), magnesium formate (($HCOO)_2Mg$), potassium carbonate ($K_2CO_3$), and ammonium sulfate (($NH_4)_2SO_4$) may be used as the freezing point adjuster.

It may be appropriate for the freezing point adjuster to have a certain level of solubility in the vaporizable solvent. For selection of a freezing point adjuster with appropriate solubility, a degree of freedom in the additive amount of the freezing point adjuster increases, and accordingly, it is possible to select an additive amount capable of securing the desired freezing point while improving the fire extinguishing function without any inhibition.

The lower limit of the solubility of the freezing point adjuster to 100 g of the vaporizable solvent or water at 0°C may be 20 g, 25 g, 30 g, 35 g, 40 g, 45 g, 50 g, 55 g, 60 g, 65 g, 70 g, 75 g, 80 g, 85 g, 90 g, 95 g, 100 g, 110 g, 115 g, 120 g, 125 g, 130 g, 135 g, 140 g, 145 g, 150 g, 155 g, 160 g, 165 g, 170 g, 175 g, 180 g, 185 g, 190 g, 195 g, 200 g, 205 g, 210 g, or 215 g or so, and the upper limit thereof may be 1,000 g, 900 g, 800 g, 700 g, 600 g, 500 g, 400 g, 300 g, 250 g, 245 g, 240 g, 235 g, 230 g, 225 g, 220 g, 215 g, 210 g, 205 g, 200 g, 195 g, 190 g, 185 g, 180 g, 175 g, 170 g, 165 g, 160 g, 155 g, 150 g, 145 g, 140 g, 135 g, 130 g, 125 g, 120 g, 115 g, 110 g, 105 g, 100 g, 95 g, 90 g, 85 g, 80 g, 75 g, 70 g, 65 g, 60 g, 55 g, 50 g, 45 g, 40 g, 35 g, or 30 g or so. The solubility may be within a range of more than or equal to, or more than any one of the above-described lower limits; or within a range of less than or equal to, or less than any one of the above-described upper limits while being within a range of more than or equal to, or more than any one of the above-described lower limits. The solubility is the weight (g) of the freezing point adjuster that can be dissolved at most in 100 g of water at 0°C, which is evaluated in the manner described in "2. Solubility evaluation" of Example sections in this specification.

The lower limit of the solubility of the freezing point adjuster in 100 g of the vaporizable solvent or water at 25°C may be 75 g, 80 g, 85 g, 90 g, 95 g, 100 g, 110 g, 115 g, 120 g, 125 g, 130 g, 135 g, 140 g, 145 g, 150 g, 155 g, 160 g, 165 g, 170 g, 175 g, 180 g, 185 g, 190 g, 195 g, 200 g, 205 g, 210 g, 215 g, 225 g, 230 g, 235 g, 240 g, 255 g, 260 g, 265 g, 270 g, 275 g, 280 g, 285 g, 290 g, 295 g, 300 g, 305 g, 310 g, 315 g, or 320 g or so, and the upper limit thereof may be 1,000 g, 900 g, 800 g, 700 g, 600 g, 500 g, 400 g, 350 g, 345 g, 340 g, 335 g, 330 g, 325 g, 320 g, 315 g, 310 g, 305 g, 300 g, 295 g, 290 g, 280 g, 275 g, 270 g, 265 g, 260 g, 255 g, 250 g, 245 g, 240 g, 235 g, 230 g, 225 g, 220 g, 215 g, 210 g, 205 g, 200 g, 195 g, 190 g, 185 g, 180 g, 175 g, 170 g, 165 g, 160 g, 155 g, 150 g, 145 g, 140 g, 135 g, 130 g, 125 g, 120 g, 115 g, 110 g, 105 g, or 100 g or so. The solubility may be within a range of more than or equal to, or more than any one of the above-described lower limits; or within a range of less than or equal to, or less than any one of the above-described upper limits while being within a range of more than or equal to, or more than any one of the above-described lower limits. The solubility is the weight (g) of the freezing point adjuster that can be dissolved in 100 g of water at 25°C at most, which is evaluated in the manner described in "2. Solubility evaluation" of Example sections in this specification.

As the freezing point adjuster, a component having a molar mass within a predetermined range may be used. When the molar weight of the freezing point adjuster is maintained at an appropriate level, the freezing point of the overall composition can be adjusted to a desired level while maintaining and improving the function (e.g., fire extinguishing function) of other components of the fire extinguishing composition. For example, the lower limit of the molar mass of the freezing point adjuster may be 10 g/mol, 15 g/mol, 20 g/mol, 25 g/mol, 30 g/mol, 35 g/mol, 40 g/mol, 45 g/mol, 50 g/mol, 55 g/mol, 60 g/mol, 65 g/mol, 70 g/mol, 75 g/mol, 80 g/mol, 85 g/mol, 90 g/mol, or 95 g/mol or so, and the upper limit thereof may be 300 g/mol, 250 g/mol, 200 g/mol, 150 g/mol, 145 g/mol, 140 g/mol, 135 g/mol, 130 g/mol, 125 g/mol, 120 g/mol, 115 g/mol, 110 g/mol, 105 g/mol, 100 g/mol, 95 g/mol, 90 g/mol, 85 g/mol, 80 g/mol, 75 g/mol, 70 g/mol, or 65 g/mol or so. The molar mass may be within a range of less than or equal to, or less than any one of the above-described upper limits; or within a range of less than or equal to, or less than any one of the above-described upper limits while being within a range of more than or equal to, or more than any one of the above-described lower limits.

The composition may also comprise other ionic compounds in addition to the ionic compound applied as the freezing point adjuster. In such a case, the ionic compound may be present so that $\Delta T1$ of Equation 1 below is within a predetermined range. Through this, it is possible to appropriately control the freezing point and the vaporization form of the composition while securing the amount of the solvent having a fire extinguishing function in the composition.

[Equation 1]

$$\Delta T1 = 1.86 \times M1 \times I1$$

In Equation 1, M1 is the molal concentration of all ionic compounds included in the composition to the solvent. That is, the M1 is the number of moles of the ionic compound per 1 kg of the solvent. In Equation 1, I1 is the number of moles of ions generated when 1 mole of the ionic compound has been dissociated. In this instance, the dissociation means when the ionic compounds have been completely dissociated.

When two or more ionic compounds exist in the composition, the $\Delta T1$ is calculated for each ionic compound, and the sum thereof is used as the $\Delta T1$ of Equation 1.

The $\Delta T1$ is selected in consideration of the desired freezing point and the form of vaporization when necessary. The lower limit of the $\Delta T1$ may be 5, 10, 15, 20, 22, or 24 or so, and the upper limit thereof may be 40, 35, 30, 25, or 20 or so. The $\Delta T1$ may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits. In such a range, the composition may be formulated so that while it is maintained in a liquid phase at a necessary time point, and vaporizes at a time point when the vaporization is required, the relevant vaporization may occur very quickly.

The composition may be controlled so that a ratio $\Delta T2/\Delta T1$ of $\Delta T2$ in Equation 2 above to $\Delta T1$ above is within a predetermined range.

For example, the lower limit of the ratio $\Delta T2/\Delta T1$ may be 0.4, 0.45, 0.5, 0.55, 0.6, 0.65, 0.7, 0.75, 0.8, or 0.85 or so, and the upper limit thereof may be 1, 0.95, 0.9, 0.85, 0.8, 0.75, or 0.7 or so. The ratio $\Delta T2/\Delta T1$ may be within a range of more than or equal to, or more than any one of the above-described lower limits; or within a range of more than or equal to, or more than any one of the above-described lower limits while being within a range of less than or equal to, or less than any one of the above-described upper limits. In such a range, the composition may be formulated so that while it is maintained in a liquid phase at a necessary time point, and vaporizes at a time point when the vaporization is required, the relevant vaporization may occur very quickly.

The composition may also be formulated so that $\Delta T3$ of Equation 3 below is within a predetermined range.

[Equation 3]

$$\Delta T3 = 1.86 \times M3$$

In Equation 3, M3 is the molal concentration of all alcohols included in the fire extinguishing composition to the vaporizable solvent. That is, the M3 is the number of moles of the alcohols per 1 kg of the solvent. When two or more alcohols are present in the composition, the $\Delta T3$ is calculated for each alcohol, and the sum thereof is used as $\Delta T3$ of Equation 3.

The upper limit of $\Delta T3$ may be 7, 6, 5, 4, 3, 2, 1, or 0 or so, and the lower limit thereof may be 0 or so. The $\Delta T3$ may be within a range of less than or equal to, or less than any one of the above-described upper limits; or within a range of more than or equal to, or more than any one of the above-described lower limits while being within a range of less than or equal to, or less than any one of the above-described upper limits.

The matter that $\Delta T3$ is within the range means that no alcohol is substantially present in the composition. The alcohol, for example, ethylene glycol or the like is a substance which has been used as a conventional additive for controlling the freezing point, but in the properties of the fire extinguishing composition disclosed herein, it does not exhibit an appropriate freezing point adjusting effect, does not appropriately control the form of vaporization, and can impart flammability and/or toxicity to the composition, so that it is appropriate to control it within the range of $\Delta T3$.

The fire extinguishing composition may comprise, for example, a carbonizable organic material as an additional component. The carbonizable organic material is an organic material that is carbonized when exposed to a flame or heat of a predetermined temperature to form carbide. The carbide formed by such an organic material is often porous, which may thus have a heat insulating function. Therefore, when the composition has been exposed to heat generation, ignition or explosion, the organic material may form appropriate carbide to exhibit the heat insulating function. For example, in the case where the organic material is applied together with a gas-generating material to be described below, the porous carbide may be formed more effectively through action of gas generated from the gas-generating material in a process of forming carbide when the organic material has been exposed to the heat generation, ignition or explosion.

As the organic material, any appropriate type may be applied without special limitation if it is a material forming the carbide when exposed to heat or flame. In addition, as the organic material, any type, which is non-flammable, or has little or no toxic gas emission, may be selected from known organic materials.

An example of such an organic material may be exemplified by sugars such as sorbitol or mannitol, polysaccharides such as starch or dextrin (e.g., MC (maleated cyclodexdrin) or metal salts of the MC), polyhydric alcohols such as pentaerythritol, dipentaerythritol, tripentaerythritol or THEIC (tris(hydroxyethyl)isocyanurate), celluloses, BSPPO (bi(4-methoxy-1-phospha-2,6,7-trioxabicyclo[2.2.2]-octan-1-sulfide)phenyl phosphate), lignin (alkali lignin or urea modified lignin), melamine compounds such as methylol melamine, phenol-formaldehyde resins and/or carbonizable polymer (charforming polymer) such as PA6T (poly-hexa methylene terephthalamide), and the like, but is not limited thereto.

A substance representatively applicable as the carbonizable organic material is starch. The starch is relatively easy to obtain, which may form the appropriate carbide when exposed to heat or flame. In order that the carbide is efficiently formed and the formed carbide effectively exerts the desired fire extinguishing or insulating effect, the type of starch may be adjusted. For example, the starch comprises amylose and amylopectin, and it is not particularly limited, but the starch whose ratio is adjusted to an appropriate level may be used.

For example, as the starch, starch containing amylose and amylopectin, the ratio of which is adjusted to an appropriate level, may be used. As is known, amylopectin and amylose are types of polysaccharides mainly found in plants, and the starch of polysaccharides is composed of amylose and amylopectin. The amylose is composed of glucose molecules linked by $\alpha$ (1→4) glycosidic bonds and has a linear chain structure, whereas the amylopectin has relatively short and highly branched chains. The amylose crystallizes relatively easily compared to the amylopectin, and the amylopectin has a relatively higher solubility in water than the amylose.

The desired composition can be provided more efficiently by using starch that amylose and amylopectin having such characteristics are present in an appropriate ratio.

For example, in the starch containing amylose and amylopectin, the lower limit of the weight ratio of the amylopectin relative to 100 parts by weight of the amylose may be 150 parts by weight, 200 parts by weight, 250 parts by weight, or 300 parts by weight or so, and the upper limit thereof may be 900 parts by weight, 850 parts by weight, 800 parts by weight, 750 parts by weight, 700 parts by weight, 650 parts by weight, 600 parts by weight, 550 parts by weight, 500 parts by weight, 450 parts by weight, 400 parts by weight, 350 parts by weight, or 300 parts by weight or so. The ratio may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits. The ratio of the amylose and the amylopectin may be measured according to the method described in Example sections of this specification.

As the starch, starch having a molecular weight, for example, a weight average molecular weight (Mw) within a predetermined range, may be used. For example, the lower limit of the weight average molecular weight of the starch may be 200,000 g/mol, 250,000 g/mol, 300,000 g/mol, 350,000 g/mol, 400,000 g/mol, 450,000 g/mol, 500,000 g/mol, 550,000 g/mol, 600,000 g/mol, 650,000 g/mol, 700,000 g/mol, 750,000 g/mol, 800,000 g/mol, 850,000 g/mol, 900,000 g/mol, 950,000 g/mol, 1,000,000 g/mol, 1,500,000 g/mol, 2,000,000 g/mol, 2,500,000 g/mol, 3,000,000 g/mol, 3,500,000 g/mol, 4,000,000 g/mol, 4,500,000 g/mol, 5,000,000 g/mol, 5,500,000 g/mol, 6,000,000 g/mol, 6,500,000 g/mol, 7,000,000 g/mol, 7,500,000 g/mol, 8,000,000 g/mol, 8,500,000 g/mol, 9,000,000 g/mol, 9,500,000 g/mol, 10,000,000 g/mol, 20,000,000 g/mol, 30,000,000 g/mol, 40,000,000 g/mol, or 50,000,000 g/mol or so, and the upper limit thereof may be 1,000,000,000 g/mol, 900,000,000 g/mol, 800,000,000 g/mol, 700,000,000 g/mol, 600,000,000 g/mol, 500,000,000 g/mol, 400,000,000 g/mol, 300,000,000 g/mol, 200,000,000 g/mol, 150,000,000 g/mol, 100,000,000 g/mol, 90,000,000 g/mol, 80,000,000 g/mol, 70,000,000 g/mol, or 60,000,000 g/mol or so. The molecular weight may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits. The starch having such a molecular weight (Mw) can more effectively form carbides having a desired function (for example, an insulating function) when exposed to heat or flame.

In the case where it is included, the lower limit of the weight ratio of the carbonizable organic material relative to 100 parts by weight of the vaporizable solvent in the fire extinguishing composition may be 1 part by weight, 2 parts by weight, 3 parts by weight, 4 parts by weight, 5 parts by weight, 6 parts by weight, 7 parts by weight, 8 parts by weight, 9 parts by weight, or 10 parts by weight or so, and the upper limit thereof may be 100 parts by weight, 90 parts by weight, 80 parts by weight, 70 parts by weight, 60 parts by weight, 50 parts by weight, 40 parts by weight, 30 parts by weight, 20 parts by weight, 10 parts by weight, 5 parts by weight, or 3 parts by weight or so. The ratio may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits. The carbonizable organic material contained in such a ratio can effectively form carbides in the composition as needed, and can ensure that the composition has excellent handleability and storage stability in whole.

The composition may further comprise, for example, a fire extinguishing agent as an additional component to secure the proper fire extinguishing function. Such a fire extinguishing agent may promote the carbonization action of the carbonizable organic material and/or gas generation of a gas-generating material to be described below. For example, the fire extinguishing agent forms acids, or acid-based salts or ions at high temperatures, and these components may serve to promote the carbonization action and gas generation processes. In addition, depending on the type of fire extinguishing agent, flame retardancy may be imparted to the carbide, or a component that alone exhibits flame retardancy may be formed. For example, the fire extinguishing agent to be described below forms a phosphoric acid-based material by decomposition at high temperature, and the like, and this material can be polymerized to have flame retardancy. Accordingly, the fire extinguishing agent may be included in the composition to enable the composition to respond to the abnormal heat generation, ignition, and/or explosion.

It is appropriate for such a substance to have a certain level or more of solubility in the solvent (e.g., water). By controlling the solubility in the solvent, an agglomeration or phase separation phenomenon of components in the composition does not occur, and the formative action of the above-described carbide and/or formation of a flame retardant can also proceed more effectively. For example, the lower limit of the solubility of the fire extinguishing agent in the solvent may be 5 g, 10 g, 15 g, 20 g, 25 g, 30 g, 35 g, or 40 g or so, and the upper limit thereof may be 1000 g, 900 g, 800 g, 700 g, 600 g, 500 g, 400 g, 300 g, 200 g, 100 g, 90 g, 80 g, 70 g, 60 g, 50 g, 40 g, or 30 g or so. The solubility may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits. The solubility is the weight (g) of the fire extinguishing agent that can be dissolved in 100 g of water at 25°C at maximum, which is evaluated in the manner described in "2. Solubility evaluation" of Example sections in this specification.

As the extinguishing agent, an agent having the above solubility may be appropriately selected and used, and an example thereof includes a phosphoric acid compound such as phosphoric acid and phosphate, a phosphonate compound, or a phosphate compound. The fire extinguishing agent may be, for example, monobasic or dibasic ammonium phosphate, urea phosphate, guanyl urea phosphate, or ammonium polyphosphate, and the like, and one or two or more of the foregoing may be selected and used. In addition, as the fire extinguishing agent, a type, which is non-flammable, or has less or no toxic gas emission, may be selected from known fire extinguishing agents.

In the case where it is included, the lower limit of the weight ratio of the fire extinguishing agent relative to 100 parts by weight of the vaporizable solvent may be 1 part by weight, 2 parts by weight, 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, or 20 parts by weight or so, and the upper limit thereof may be 100 parts by weight, 90 parts by weight, 80 parts by weight, 70 parts by weight, 60 parts by weight, 50 parts by weight, 40 parts by weight, 30 parts by weight, 20 parts by weight, or 10 parts by weight or so. The ratio may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits. The extinguishing agent included in such a ratio can exert an effective suppression effect on heat or flame and a formation effect of a porous carbide in the composition as needed, and can ensure that the composition has excellent handleability and storage stability in whole.

The present specification may further comprise a gas-generating material in the composition. The gas-generating material that may be included in the composition is a material that generates gas when exposed to heat or flame. The gas thus generated may function to directly extinguish the heat or flame, and may also perform, in a process of forming a carbide by the carbonizable organic material, a function of making the carbide more porous.

In the type of gas generated by the gas-generating material, various gas-generating materials may be used, but a type, which is non-flammable, or has less or no toxic gas emission, may be selected from known gas-generating materials. The type of gas generated by the gas-generating material may be, for example, nitrogen gas, carbon dioxide, and/or water vapor, and the like.

Various materials generating such a gas are known. For example, the material generating nitrogen gas may be exemplified by melamine, phosphate, guanidine, urea, melamine pyrophosphate, dicyandiamide, guanylurea phosphate, and glycine, and the like; the material generating carbon dioxide may be exemplified by potassium bicarbonate, sodium bicarbonate, calcium bicarbonate, and magnesium bicarbonate, and the like; and the material generating water vapor may be exemplified by calcium hydroxide, magnesium dihydroxide, and aluminum trihydroxide, and the like, but the material which is applicable in the present specification is not limited thereto.

As the gas-generating material, one or a mixture of two or more selected from the above-described types may be used.

In the case where the gas-generating material is included, the lower limit of the weight ratio of the gas-generating material relative to 100 parts by weight of the vaporizable solvent may be 1 part by weight, 2 parts by weight, 3 parts by weight, 4 parts by weight, 5 parts by weight, 6 parts by weight, 7 parts by weight, 8 parts by weight, 9 parts by weight, or 10 parts by weight or so, and the upper limit thereof may be 100 parts by weight, 90 parts by weight, 80 parts by weight, 70 parts by weight, 60 parts by weight, 50 parts by weight, 40 parts by weight, 30 parts by weight, 20 parts by weight, or 10 parts by weight or so. The ratio may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits. The gas-generating material included in such a ratio can exert an effective suppression effect on heat or flame and a formation effect of porous carbide in the composition as needed, and can ensure that the composition has excellent handleability and storage stability in whole.

The composition may further comprise a water-absorbing polymer as an additional component.

The water-absorbing polymer is a polymer having a property capable of absorbing water. In one example, the water-absorbing polymer may be a so-called hydrogel polymer or hydrogel, which is generally defined as a crosslinked hydrophilic polymer. Such a polymer is also known as an SAP (Super Absorbent Polymer).

The water-absorbing polymer is a material that can absorb moisture tens to thousands of times its own weight. Such a material allows the composition of the present specification to exist in a gel state in whole, thereby performing the function of ensuring handleability and storage stability.

The type of water-absorbing polymer is not particularly limited, and any polymer which is generally applicable as the SAP may be used without limitation. In addition, as the water-absorbing polymer, a type, which is non-flammable, or has less or no toxic gas emission, may be selected from known water-absorbing polymers.

Usually, a polyacrylate-based vinyl polymer is used as the water-absorbing polymer. Here, the polyacrylate-based polymer is a polymer manufactured from an acrylate-based monomer, and if necessary, other known monomers may be further used to form the polymer.

The water-absorbing properties may be adjusted so that the water-absorbing polymer exhibits properties suitable for uses disclosed in the present specification.

For example, the lower limit of the centrifuge retention capacity (CRC) of the water-absorbing polymer according to EDANA (European Disposables and Nonwovens Association) method WSP 241.3 may be 12 g/g, 13 g/g, 14 g/g, 15 g/g, 16 g/g, 17 g/g, 18 g/g, 19 g/g, 20 g/g, 21 g/g, 22 g/g, 23 g/g, 24 g/g, 25 g/g, 26 g/g, 27 g/g, 28 g/g, 29 g/g, 30 g/g, 31 g/g, 32 g/g, or 33 g/g or so, and the upper limit thereof may be 60 g/g, 55 g/g, 50 g/g, 45 g/g, 40 g/g, or 35 g/g or so. The retention capacity (CRC) may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits.

The water-absorbing polymer having the above absorption can be combined with other components of the composition of the present specification to exhibit the desired properties.

In one example, the water-absorbing polymer may be a particulate polymer, where the lower limit of the average particle diameter of the water-absorbing polymer may be 10 $\mu$m, 50 $\mu$m, 100 $\mu$m, or 140 $\mu$m or so, and the upper limit thereof may be 1000 $\mu$m, 950 $\mu$m, 900 $\mu$m, 850 $\mu$m, 800 $\mu$m, 750 $\mu$m, 700 $\mu$m, 650 $\mu$m, 600 $\mu$m, 550 $\mu$m, 500 $\mu$m, 450 $\mu$m, 400 $\mu$m, 350 $\mu$m, 300 $\mu$m, 250 $\mu$m, or 200 $\mu$m or so. The average particle diameter may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The above average particle diameter may be measured according to the method specified in NWSP 210.0.R2(15).

When the water-absorbing polymer is included in the composition, the lower limit of the weight ratio of the water-absorbing polymer relative to 100 parts by weight of the vaporizable solvent may be 1.0 part by weight, 1.5 parts by weight, 2.0 parts by weight, 2.5 parts by weight, 3.0 parts by weight, 3.5 parts by weight, 4.0 parts by weight, 4.5 parts by weight, or 5.0 parts by weight or so, and the upper limit thereof may be 20.0 parts by weight, 19.5 parts by weight, 19.0 parts by weight, 18.5 parts by weight, 18.0 parts by weight, 17.5 parts by weight, 17.0 parts by weight, 16.5 parts by weight, 16.0 parts by weight, 15.5 parts by weight, 15.0 parts by weight, 14.5 parts by weight, 14.0 parts by weight, 13.5 parts by weight, 13.0 parts by weight, 12.5 parts by weight, 12.0 parts by weight, 11.5 parts by weight, 11.0 parts by weight, 10.5 parts by weight, 10.0 parts by weight, 9.5 parts by weight, 9.0 parts by weight, 8.5 parts by weight, 8.0 parts by weight, 7.5 parts by weight, 7.0 parts by weight, 6.5 parts by weight, 6.0 parts by weight, 5.5 parts by weight, or 5.0 parts by weight or so. The ratio may be within a range of less than or equal to, or less than any one of the above-described upper limits; or within a range of more than or equal to, or more than any one of the above-described lower limits; or within a range of more than or equal to, or more than any one of the above-described lower limits while being within a range of less than or equal to, or less than any one of the above-described upper limits.

The composition comprises the above components, and may further comprise additional components, if necessary.

For example, the composition may further comprise a buffer.

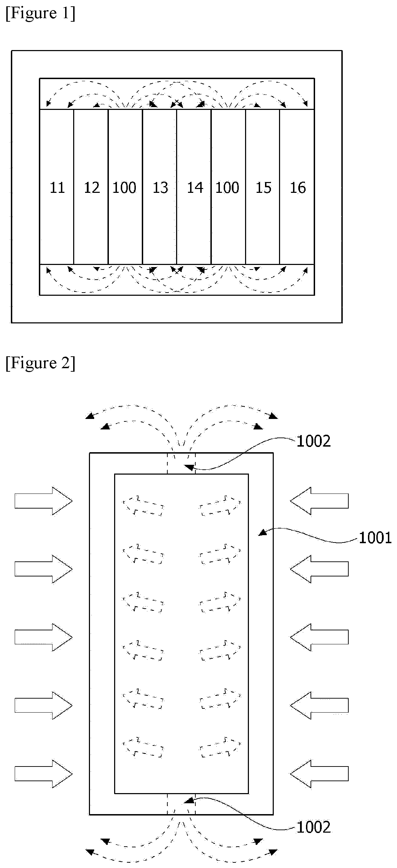

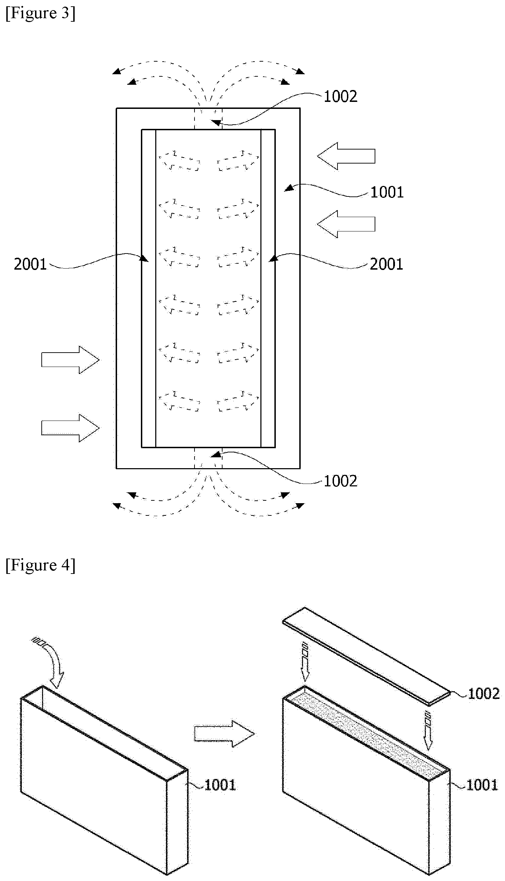

Referring to Figures 2 and 3, in an abnormal state, heat may be applied to the fire extinguishing device, and additionally, momentary high pressure may also be applied. For example, in a structure such as Figure 1, if the battery cells (12, 13, 14, 15) adjacent to the fire extinguishing device (100) explode or rapidly expand, high pressure is applied to the fire extinguishing device (100). If the fire extinguishing device (100) is momentarily contracted by the pressure thus applied, the vaporizable material existing inside may be discharged to the outside before it is vaporized, and such discharge may reduce the efficiency of the fire extinguishing action.

The buffer may perform a buffer action for the momentarily applied pressure as described above, and as a result, it may enable so that the vaporization of the vaporizable material inside sufficiently occurs. In addition, the buffer also plays a role in carrying the vaporizable material optionally. That is, if the buffer has porosity as described below, or is in the form of woven fabric, nonwoven fabric, or felt, the buffer may exhibit the characteristic of absorbing or carrying the vaporizable material.

The type of the buffer is not particularly limited if it can perform the action, and for example, one having an appropriate density and/or thermal decomposition temperature may be used.

For example, the upper limit of the density of the buffer may be 3, 2.5, 2, 1.5, 1.3, 1.1, 0.9, 0.7, 0.5, 0.3, 0.1, 0.08, 0.06, or 0.04 or so, and the lower limit thereof may be 0.001, 0.005, 0.01, 0.05, 0.1, or 0.15 or so. The density may be within a range of less than or equal to, or less than any one of the above-described upper limits; or within a range of less than or equal to, or less than any one of the above-described upper limits while being within a range of more than or equal to, or more than any one of the above-described lower limits. The unit of the density is g/cm$^3$.

For example, the upper limit of the thermal decomposition temperature of the buffer may be 2,000°C, 1,800°C, 1,600°C, 1,400°C, 1,200°C, 1,000°C, 900°C, 800°C, 600°C, 500°C, or 400°C or so, and the lower limit thereof may be 150°C, 200°C, 250°C, 300°C, 350°C, 400°C, 450°C, 500°C, 550°C, 600°C, 650°C, 700°C, 750°C, or 800°C or so. The thermal decomposition temperature may be within a range of more than or equal to, or more than any one of the above-described lower limits; or within a range of less than or equal to, or less than any one of the above-described upper limits while being within a range of more than or equal to, or more than any one of the above-described lower limits. The method of measuring the thermal decomposition temperature is described in "11. Thermal decomposition temperature" of Example sections in this specification.

As the buffer, any known material may be used without special limitation if it has the density and/or thermal decomposition temperature. For example, as the buffer, known glass fibers, ceramic fibers and/or mineral fibers known as insulating materials may be used. Such inorganic fibers may be in the form of porous films, porous sheets, porous foils, wools, or woven or non-woven fabrics such as a form of felts.

In addition, as the buffer, for example, inorganic foams such as various metal foams, woven fabrics, nonwoven fabrics, or felts made of glass wool, mineral wool, glass fibers, or mineral fibers, or foams, or woven fabrics, nonwoven fabrics, or felts formed of carbonizable organic materials to be described below may also be used.

Inorganic gels (for example, silica gel, etc.) called so-called wet gels may also be used as the buffer.

As the buffer, any one or a combination of two or more selected from the various types may be used.

The size of the buffer is determined according to the size of the sealed space, which is not particularly limited. For example, when the buffer is in the form of porous films, porous sheets, porous foils, wools, woven fabrics, nonwoven fabrics, or felts as described above, the lower limit of the thickness of the relevant buffer may be 0.1 mm, 0.5 mm, 1 mm, 1.5 mm, 2 mm, or 2.5 mm or so, and the upper limit thereof may be 20 mm, 15 mm, 10 mm, 9 mm, 8 mm, 7 mm, 6 mm, 5 mm, 4 mm, or 3 mm or so. The thickness may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The composition may exhibit advantageous physical properties, and the like, including the desired fire extinguishing effect, through a combination of the above-described components.

The composition may have a controlled viscosity and/or thixotropic index.

For example, the lower limit of the viscosity of the composition may be 30,000 cP, 40,000 cP, 50,000 cP, 60,000 cP, 70,000 cP, 80,000 cP, 90,000 cP, 100,000 cP, 110,000 cP, 120,000 cP, 130,000 cP, 140,000 cP, 150,000 cP, or 155,000 cP or so, and the upper limit thereof may be 600,000 cP, 550,000 cP, 500,000 cP, 450,000 cP, 400,000 cP, 350,000 cP, 300,000 cP, 250,000 cP, 200,000 cP, 150,000 cP, 100,000 cP, 90,000 cP, 80,000 cP, or 70,000 cP or so. The viscosity may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. Such a viscosity is a value measured at room temperature (about 25°C) and a rotation speed of 0.5 rpm, and the specific measurement method is described in Example sections.

For example, the lower limit of the thixotropic index of the composition may be 2, 4, 6, 8, 10, or 10.5 or so, and the upper limit thereof may be 20, 18, 16, 14, 12, 10, 8, or 6 or so. The thixotropic index may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. Such a thixotropic index is a value obtained by dividing the viscosity measured at room temperature (about 25°C) and a rotation speed of 0.5 rpm by the viscosity measured at room temperature (about 25°C) and a rotation speed of 5 rpm, and the specific measurement method is described in Example sections.

A composition having such viscosity and/or thixotropic index may exhibit excellent handleability and storage stability, and the like.

The composition may exhibit certain latent heat characteristics. Latent heat is usually defined as a heat quantity required for any material to cause a state change (phase transition) without any temperature change. However, when the composition exhibits the latent heat, it does not necessarily have to undergo the state change in whole. The latent heat may be generated in the process of changing the state of at least a part of the composition, or the components included in the composition.

The matter that the composition exhibits latent heat means that in a DSC (Differential Scanning Calorimeter) analysis conducted in the manner described in Examples to be described below, the composition exhibits an endothermic peak in a predetermined temperature range. The process in which the composition exhibits the latent heat may be an isothermal process or a process similar thereto. Therefore, the composition can be applied to a product that generates heat to control the heat while maintaining the temperature of the product uniformly, and can minimize or prevent the effect of abnormal heat generation, explosion and/or ignition occurring in one product on other adjacent products.

The lower limit of the latent heat exhibited by the above composition may be, for example, 500 J/g, 550 J/g, 600 J/g, 650 J/g, 700 J/g, 750 J/g, 800 J/g, 850 J/g, 900 J/g, 950 J/g, 1000 J/g, 1100 J/g, 1200 J/g, or 1300 J/g or so, and the upper limit thereof may be 3000 J/g, 2800 J/g, 2600 J/g, 2400 J/g, 2200 J/g, 2000 J/g, 1800 J/g, 1600 J/g, 1400 J/g, 1200 J/g, 1000 J/g, or 900 J/g or so. The latent heat may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The lower limit of the range of an on-set temperature at which the composition begins to exhibit the latent heat may be, for example, 50°C, 55°C, 60°C, 65°C, 70°C, 75°C, 80°C, 85°C, 90°C, or 95°C or so, and the upper limit thereof may be 200°C, 180°C, 160°C, 140°C, 120°C, 100°C, 90°C, or 80°C or so. The on-set temperature may be confirmed within a range of more than or equal to, or more than any one of the above-described lower limits while being less than or equal to, or less than any one of the above-described upper limits. The on-set temperature means the temperature of the left on-set point of the endothermic peak section of the DSC analysis.

The lower limit of the temperature section representing the latent heat of the composition may be, for example, 50°C, 55°C, 60°C, 65°C, 70°C, 75°C, 80°C, 85°C, 90°C, 95°C, 100°C, 110°C, 120°C, 130°C, 140°C, 150°C, 160°C, 170°C, or 180°C or so, and the upper limit thereof may be 300°C, 280°C, 260°C, 240°C, 220°C, 200°C, 180°C, or 160°C or so. The temperature section range may be confirmed within a range of more than or equal to, or more than any one of the above-described lower limits while being less than or equal to, or less than any one of the above-described upper limits. The temperature section is a value obtained by subtracting the temperature of the left on-set point from the temperature of the right on-set point in the endothermic peak section of the DSC analysis.

In addition, the composition may also further comprise various types of known additives if the above-described physical properties are not impaired. In this case, the types of additives are not particularly limited. Various types of additives may be used, but it may be appropriate that a type, which is non-flammable, or has less or no toxic gas emission, is selected from known additives.

The present specification also discloses a fire extinguishing device comprising the composition. The fire extinguishing device may be manufactured by loading the composition into an appropriate case.

The fire extinguishing device comprises a case having a sealed space inside, and a vaporizable solvent or the composition present in the sealed space. The composition may be the above-described fire extinguishing composition, and the vaporizable solvent may be one component of the composition.

The case is a container for maintaining the vaporizable solvent or the composition. The case has the sealed space inside, or is prepared so that it may form the sealed space. At this time, the matter that the case is prepared so that it may form a sealed space inside means that the case is present in a state where the sealed space is formed inside the case, or so that a certain space exists inside the case, and the space is not in a sealed state, but the sealed space can be formed in a manner of sealing the open portion.

The sealed space of such a case may have a vent region. The term vent region may mean a region where it is sealed in a first state to be present so that the sealed state of the space can be maintained, but is open in a second state so that the materials inside the space can be discharged. The second state may mean, for example, a state in which abnormal ignition, heat generation and/or explosion occurs in an environment to which the composition or fire extinguishing device is applied, and the first state may mean a state in which the abnormal ignition, abnormal heat generation, and abnormal explosion do not occur.

Such a vent region may be formed in a manner to be described below.

In one example, the case may have a WVTR (Water Vapor Transmission Rate) in a predetermined range, or may include a portion having such a WVTR. For example, at least the portion of the case forming the sealed space may have a WVTR (Water Vapor Transmission Rate) in a predetermined range. For example, the upper limit of the WVTR of the case may be 10, 9.5, 9, 8.5, 8, 7.5, 7, 6.5, 6, 5.5, 5, 4.5, 4, 3.5, 3, 2.5, 2, 1.5, 1, 0.5, 0.45, 0.4, 0.35, 0.3, 0.25, 0.2, 0.15, 0.1, 0.05, or 0.01 or so, and the lower limit thereof may be 0, 0.1, 0.2, 0.3, 0.4, or 0.5 or so. The WVTR may be within a range of less than or equal to, or less than any one of the above-described upper limits; or within a range of less than or equal to, or less than any one of the above-described upper limits while being within a range of more than or equal to, or more than any one of the above-described lower limits. The closer the WVTR is to the range disclosed in Examples sections of this specification within the above-described range, the more excellent the effect can be secured. The unit of the WVTR is g/m$^2$·day, which is

measured in the manner described in "7. WVTR (Water Vapor Transmission Rate) evaluation" of Example sections in this specification.

In one example, when a sealed space has been formed within the case at least, a certain level or more of the entire area of the case forming the sealed space may have the WVTR within the above-described range.

For example, the WVTR in the above-described range can be confirmed in an area more than or equal to a certain ratio of the total area of the case. For example, the lower limit of the ratio of the area of the portion having the WVTR in the above-described range among the total area of the case may be 80%, 85%, 90%, 95%, 97%, or 99% or so, and the upper limit thereof may be 100% or so. The ratio may be within a range of more than or equal to, or more than any one of the above-described lower limits; or within a range of less than or equal to, or less than any one of the above-described upper limits while being within a range of more than or equal to, or more than any one of the above-described lower limits.

In another example, the area in a certain level or more among the area of the portion forming the sealed space in the case may have the WVTR (Water Vapor Transmission Rate) in the above-described range. For example, the lower limit of the ratio of the portion exhibiting the WVTR in the above-described range among the area of the case portion forming the sealed space may be 80%, 85%, 90%, 95%, 97%, or 99% or so, and the upper limit thereof may be 100% or so. The ratio may be within a range of more than or equal to, or more than any one of the above-described lower limits; or within a range of less than or equal to, or less than any one of the above-described upper limits while being within a range of more than or equal to, or more than any one of the above-described lower limits.

The content means that the sealed space inside the case is surrounded entirely by the region having substantially the WVTR in the above-described range. By this configuration, an instantaneous increase in internal pressure inside a fire extinguishing device to be described below can be effectively induced.

The fire extinguishing device is configured so that it can stably maintain the internal vaporizable solvent or composition in a normal state, and then release the vaporizable solvent, all or a part of the composition, or its vapor to the outside in an abnormal state. The abnormal state may be, for example, abnormal heat generation, ignition, and/or explosion, or a state where the TR and/or TP occurs, or there is a risk of occurrence.

Descriptions will be made assuming a case where the fire extinguishing device is applied to a battery module.

Figure 1 is a schematic diagram of a case where the fire extinguishing device (S) is applied to a battery module. As shown in Figure 1, the battery module may be configured by arranging a plurality of battery cells (11, 12, 13, 14, 15, 16) adjacent to each other, where the fire extinguishing device (S) may be arranged between battery cells as shown in the drawing (for example, between 12 and 13 in Figure 1 and between 14 and 15 in Figure 1).

The fire extinguishing device (S) maintains a vaporizable solvent, and the like inside in a normal state. In an abnormal state, the vaporizable solvent, and the like of the fire extinguishing device (S) may be ejected (dotted arrows in Figure 1) while having directionality, for example, through the above-described vent region, and the like, thereby responding to high temperatures or flames due to abnormal heat generation, ignition, and/or explosion. In Figure 1, the case where the substances are ejected from both directions of the upper and lower ends in the fire extinguishing device (S) is described, but the ejection direction is not limited to Figure 1. The ejection direction may also be in one direction of the fire extinguishing device (S), and may also be in two or more directions. Such ejection directions may be adjusted by forming the vent region.

In order that the fire extinguishing device effectively performs the function in the abnormal state, it is required that the vaporizable solvent, and the like, existing inside the case in the normal state can be stably maintained, and that the vaporizable solvent, and the like can be quickly exhausted by discharging all of them to the outside in a vaporized state as much as possible when an abnormal state occurs. The fire extinguishing device can satisfy the requirements.

A principle in which the fire extinguishing device performs the action is explained.

Figure 2 shows only the fire extinguishing device (S) of Figure 1 separately. In a configuration such as Figure 1, if abnormal heat generation, ignition, and/or explosion occurs in at least one of the battery cells, high heat in a certain level or more is instantaneously applied to the fire extinguishing device as indicated by the solid arrows in Figure 2. The vaporizable solvent present inside the fire extinguishing device is vaporized by the applied heat. In Figure 2, as indicated by dotted arrows in the internal sealed space of the fire extinguishing device case (1001), the substance thus vaporized is randomly propagated in all directions within the space, where if the sealed space of the case (1001) is substantially surrounded by the portion having the above-described WVTR, the vaporized substance cannot be released to the outside, so that the inside of the case (1001) becomes a very high-pressure state instantaneously. When the vent region (1002) of the case is opened momentarily at a high pressure in a certain level or more, the internal gas is quickly discharged to the outside through the opened vent region (1002).

If the WVTR of the case surrounding the sealed space is not high, the internal pressure of the case (1001) may not effectively increase in the state, or the increase speed may be slow, so that the opening of the vent region (1002) may not be effectively performed, or even when the vent region (1002) is opened, the internal pressure may not be sufficient, so that some of the vaporized material may remain without being consumed due to discharge to the outside, or the discharge speed may be excessively slow.

If the WVTR of the case is kept low, there is an additional effect of ensuring the storage stability of the internal material in the normal state.

In addition, as the composition comprises the above-described ionic compound, and the like, and satisfies $\Delta T1$ and $\Delta T2$, and the like, the effects may be maximized.

The method of forming the vent region is not particularly limited. The vent region may be formed by designing the case forming the sealed space so that it may be opened when the internal pressure of the case has reached a certain level. For example, if some regions of the case forming the sealed space are configured to have lower strength than other regions, the portion having the lower strength may be opened by the increased internal pressure. In addition, by forming a sealed space through sealing using a hot melt material, and the like, it is also possible to use a method in which opening occurs by melting at a predetermined temperature, and the like. In another method, the vent region may be formed by making only a certain portion of the case forming the sealed space to have a thinner thickness relative to other regions. Such a method of forming the vent region can be easily adopted by those skilled in the art.

For example, when the fire extinguishing device is applied to a battery module or pack, for the convenience of application, the case may be a rectangular case, a pouch-shaped case, and/or a cylindrical case, which is the same shape as the battery cell. In this case, the vent region may also be formed by a method of controlling the bonding strength of the cover forming the sealed space in the rectangular or cylindrical case.

The case may be formed using a known material if it may satisfy the above-described WVTR, where the material may have a single-layered structure or a multi-layered structure of two or more layers.

For example, the case may be formed using a material, which may exhibit the WVTR in the above range, of an appropriate organic layer and/or inorganic layer.

As the organic layer, for example, a known polymer film or sheet may be used. The organic film may be exemplified by a cellulose-based polymer film; a COP (cyclo olefin copolymer) film; an acrylic polymer film; a polyolefin film; a PVA (polyvinyl alcohol) film; a PVC (poly(vinyl chloride)) film, a PES (poly ether sulfone) film; a PEEK (polyetheretherketon) film; a PPS (polyphenylsulfone) film; a PEI (polyetherimide) film; a PEN (polyethylenemaphthatlate) film; a polyester film such as a PET (poly(ethylene terephthalate)) film; a PI (polyimide) film; a PSF (polysulfone) film and/or a PAR (polyarylate) film, and the like.

For example, a metal layer, a metal oxide layer, a metal nitride layer, or a metal oxynitride layer, and the like may be used as the inorganic layer. For example, the inorganic layer may be a metal layer, a metal oxide layer, a metal nitride layer, or a metal oxynitride layer, and the like, which contains one or more selected from the group consisting of In, Sn, Pb, Au, Cu, Ag, Zr, Hf, Zn. Al, Si, La, Ti, and Ni. For example, a foil, sheet, or film of the material may be applied, or a layer formed by depositing the metal layer, the metal oxide layer, the metal nitride layer, or the metal oxynitride layer on an appropriate base material may be used.

The material forming the case may be any single layer selected from the inorganic layer and the organic layer, or a multilayered structure in which two or more of the layers are laminated.

The thickness of the inorganic layer and/or the organic layer is selected in consideration of the physical properties such as the desired WVTR, which is not particularly limited. For example, the lower limit of the thickness may be 1 $\mu$m, 5 $\mu$m, 10 $\mu$m, 15 $\mu$m, 20 $\mu$m, 25 $\mu$m, or 30 $\mu$m or so, and the upper limit thereof may be 5,000 $\mu$m, 4,000 $\mu$m, 3,000 $\mu$m, 2,000 $\mu$m, 1,000 $\mu$m, 500 $\mu$m, 200 $\mu$m, 150 $\mu$m, 100 $\mu$m, 90 $\mu$m, 80 $\mu$m, 70 $\mu$m, 60 $\mu$m, 50 $\mu$m, 40 $\mu$m, or 30 $\mu$m or so. The thickness may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The extinguishing device may comprise additional constitutions so that the action is performed more effectively.

For example, the fire extinguishing device may further comprise a thermally conductive layer. Such a thermally conductive layer may be present at an appropriate location within the fire extinguishing device. For example, the thermally conductive layer may be present between the case and the vaporizable solvent or composition in the fire extinguishing device, or the thermally conductive layer may be present adjacent to the case.

Figure 3 is an example of a case where the thermally conductive layer (2001) is added thereto in the fire extinguishing device of Figure 2. The thermally conductive layer may be present at a different location within the case, and the number thereof may also be one, or a plurality of two or more.

The term thermally conductive layer is a layer whose thermal conductivity (based on 20°C) is in a range to be described below. The lower limit of the thermal conductivity (based on 20°C) of the thermally conductive layer may be 15, 18, 20, 50, 100, 150, 200, 250, 300, 350, or 400 or so, and the upper limit thereof may be 2,000, 1,500, 1,000, 900, 800, 700, 600, 500, 400, 300, 200, 100, or 50 or so. The thermal conductivity may be within a range of more than or equal to, or more than any one of the above-described lower limits; or within a range of less than or equal to, or less than any one of the above-described upper limits while being within a range of more than or equal to, or more than any one of the above-described lower limits. The unit of the thermal conductivity is W/mK.

The type of the thermally conductive layer is not particularly limited if it has the thermal conductivity. Usually, metal materials may be used as the thermally conductive layer because they have excellent thermal conductivity properties. For example, a layer made of a metal material such as aluminum, gold, pure silver, tungsten, copper, nickel, or platinum may be applied.

The thickness of the thermally conductive layer is not particularly limited, where an appropriate thickness may be set in consideration of the specifications of the fire extinguishing device, and the like. For example, the lower limit of the thickness of the thermally conductive layer may be 1 $\mu$m, 5 $\mu$m, 10 $\mu$m, 15 $\mu$m, 50 $\mu$m, 75 $\mu$m, or 90 $\mu$m or so, and the upper limit thereof may be 500 $\mu$m, 400 $\mu$m, 300 $\mu$m, 200 $\mu$m, 100 $\mu$m, 50 $\mu$m, 40 $\mu$m, or 30 $\mu$m or so. The thickness may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

As shown in Figure 3, in some cases, the heat generated in an abnormal state may not be uniformly applied to the fire extinguishing device, but may also be locally applied to only a certain region. However, in order that the vaporizable solvent inside the fire extinguishing device quickly vaporizes to achieve a high-pressure state, the heat in the abnormal state must be uniformly applied to the fire extinguishing device. In the case where the thermally conductive layer exists, even if the heat in the abnormal state is locally applied, it may quickly transfer the relevant heat throughout the fire extinguishing device, and accordingly the fire extinguishing action of the fire extinguishing device as described above may occur quickly and efficiently.

In order that the fire extinguishing device more efficiently secures the effect, the amount of the vaporizable solvent or the composition including the vaporizable solvent present in the internal space or the sealed space of the case in the fire extinguishing device may be adjusted. For example, the lower limit of the ratio of the volume occupied by the vaporizable solvent or the composition in the total volume of the internal space or the sealed space of the case may be 70%, 75%, 80%, 85%, 90%, or 95% or so, and the upper limit thereof may be 100% or so. The ratio may be within a range of more than or equal to, or more than any one of the above-described lower limits; or within a range of less than or equal to, or less than any one of the above-described upper limits while being within a range of more than or equal to, or more than any one of the above-described lower limits. Under such a ratio, the rapid increase in the internal pressure as described above may be more effectively induced.

The present specification also discloses electronic equipment or devices to which the composition or fire extinguishing device is applied.

The type of electronic equipment or device is not particularly limited. For example, the composition or fire extinguishing device may be applied to equipment or devices, and the like, where there is a risk of abnormal heat generation, ignition and/or explosion in driving, maintenance and/or storage processes, and the relevant abnormal phenomenon must be controlled.

An example of such equipment or device representatively includes a battery. Particularly, in a battery module constructed using a plurality of battery cells, it is important to prevent abnormal heat generation, ignition and/or explosion occurring in one battery cell from spreading to other adjacent battery cells.

Therefore, the present specification discloses a battery module or a battery pack comprising the fire extinguishing device, and the like.

Such a battery module may basically comprise a plurality of battery cells; and the fire extinguishing device disposed between the battery cells.

If the fire extinguishing device is applied, the specific configuration of the battery module, for example, the type of battery cell, and the like, is not particularly limited, and known materials may be applied. For example, a known pouch-shaped, rectangle-shaped, or cylindrical battery cell may be used as the battery cell.

The manufacturing method of the battery module is not particularly limited, and for example, as described above, a method of manufacturing a fire extinguishing device as in the form of a battery cell, and then placing the fire extinguishing device at a required position during the manufacturing process of the battery module, and the like may be used.

**Advantageous Effects**

The present specification relates to a fire extinguishing composition, a fire extinguishing device, and a use thereof. The present specification can provide a composition, a fire extinguishing device, and a use thereof, which can be applied to a product or element with a possibility of heat generation, ignition, and/or explosion during drive, storage, and/or maintenance processes to effectively respond to the heat generation, ignition, and/or explosion. The present specification can also provide a fire extinguishing composition, which is non-flammable to have no flash point, or can have a flash point to the extent that is adaptable to heat generation, ignition, and/or explosion, and is non-toxic, and a fire extinguishing device comprising the same.

**Description of Drawings**

Figure 1 is an exemplary diagram of a battery module to which a fire extinguishing device is applied.

Figure 2 is an exemplary diagram for explaining an operation of a fire extinguishing device.

Figure 3 is an exemplary diagram for explaining an operating principle of a fire extinguishing device.

Figure 4 is a diagram for explaining a process of manufacturing a fire extinguishing device in an example.

Figure 5 is a cross-section showing one exemplary form of a case applied in an example.

**Mode for Invention**

Hereinafter, the fire extinguishing composition, and the like disclosed in the present specification will be specifically explained through examples and comparative examples, but the scope of the fire extinguishing composition, and the like is not limited by the following examples.

**1. Freezing point measurement**

A freezing point was evaluated by the method specified in OECD Guideline for testing of chemicals 102 (adopted by the council on 27th July 1995).

**2. Solubility evaluation**

Solubility was evaluated based on ASTM E1148-02 standard. The maximum amount of the sample dissolved in 100 g of water at 0°C or room temperature (about 25°C) was evaluated according to the standard to identify solubility.

**3. Convection test**

A composition was loaded into an aluminum dish with a bottom thickness of about 0.2 mm or so. The loading was made such that the composition had a thickness of about 3 mm or so. The aluminum dish was placed on a temperature sensor (k-type thermocoupler). Subsequently, a flame was applied vertically at a height of about 1 inch or so from the composition loaded on the dish. The flame was applied using butane gas (can type butane gas with a capacity of 220 g (unused product)) and a torch. The temperature was measured with the temperature sensor while applying the flame for 3 minutes or so, and it was evaluated according to the following criteria.

<Evaluation criteria>

PASS: When the temperature sensor's measurement temperature remains less than 250°C

NG: When a temperature above 250°C is measured from the temperature sensor, or it is observed for the aluminum dish to be melted

**4. Chain ignition test**

Rectangular batteries were disposed side by side with an interval of about 3 mm, and a fire extinguishing device comprising a composition was placed therebetween. As the rectangular battery, CATL's product (120 Ah, 3.2 V, size = thickness $\times$ breadth $\times$ width = 48 $\times$ 174 $\times$ 165) was used, and applied to the test in a 100% charged state. In the above arrangement, battery ignition was induced in one rectangular battery according to SAE J2464:2009 standard, and chain ignition in the other cell was checked. The ignition of the battery was caused by penetrating a nail with a diameter of about 5 mm into the rectangular battery at a speed of 25 mm/sec (Nail Penetration method).

<Evaluation criteria>

PASS: When no ignition occurs in the other battery cell other than the battery cell through which the nail has penetrated

NG: When ignition occurs in the other battery cell other than the battery cell through which the nail has penetrated

## 5. Molecular weight measurement

A molecular weight of starch was evaluated in the following manner.

(1) Preparation of mobile phase

A mobile phase A was prepared by filtering 1000 mL of a 150 mM $NaNO_3$ aqueous solution containing 0.02 wt% of $NaN_3$ using a solvent clarification system (Millipore Millisolve Kit, MilliporeSigma).

(2) Preparation of sample solution

A sample intended to be measured was collected in an amount of 25 mg, and mixed with 5 mL of a 150 mM $NaNO_3$ aqueous solution containing 0.02 wt% of $NaN_3$, and then a sample solution was prepared by heating the mixture at 80°C for 20 hours, and then filtering it with a 0.4 $\mu$m Nylon Syringe Filter.

(3) GPC (Gel Permeation Chromatography)/MALS (Multi-Anglue Light Scattering Detection) conditions

The molecular weight was evaluated using the sample solution and the mobile phase A in the following manner.

Measuring instrument: Agilent GPC (Agilent 1200 series, U.S.)

Stationary phase: connecting Shodex OH-Pak 804 column and Shodex OH-Pak 80 column

Mobile phase: A; 0.02% $NaN_3$, 150 mM $NaNO_3$ aqueous solution = 100 (v/v %)

Flow rate: 0.4 mL/min

Stationary phase temperature: 25°C

Injected amount: 100 $\mu$l (0.45 $\mu$m filtered)

Analysis time: 120 minutes

## 6. Measurement of amylopectin and amylose contents

Contents of amylopectin and amylose in starch were evaluated according to the method described in a paper (Potato Research 31 (1988) 241-246).

First, a sample was prepared by dissolving about 5 mg of starch in about 1 mL of sterile water (Step 1), and heated to 95°C for about 15 minutes in a constant temperature water bath (Step 2).

Subsequently, about 20 $\mu$l of the sample was placed in a cuvette (Step 3), and about 980 $\mu$l of an iodine solution was added thereto and mixed (Step 4).

Subsequently, absorbance of the sample mixed with the iodine solution at wavelengths of 525 nm and 700 nm was measured and recorded, respectively (Step 5). The absorbance was measured using KLAB's OPTIZEN POP model.

About 20 $\mu$l of water was placed in another cuvette, 980 $\mu$l of the iodine solution was added thereto, and mixed (Step 6). For the solution of Step 6, absorbance at wavelengths of 525 nm and 700 nm was measured and recorded, respectively, in the same manner as in Step 5 (Step 7).

The absorbance obtained in Step 7 was subtracted from the absorbance obtained in Step 5, and the ratio (%) of amylose was confirmed according to Equation C below (Step 8).

[Equation C]

$$PA = 3.039 - \cfrac{7.154 \times \cfrac{OD_{700}}{OD_{525}}}{3.048 \times \cfrac{OD_{700}}{OD_{525}}} - 19.192$$

In Equation C, PA is the ratio (%) of amylose, $OD_{700}$ is the value obtained by subtracting the absorbance at a wavelength of 700 nm measured in Step 7 from the absorbance at a wavelength of 700 nm measured in Step 5, and $OD_{525}$ is the value obtained by subtracting the absorbance at a wavelength of 525 nm measured in Step 7 from the absorbance at a wavelength of 525 nm measured in Step 5.

### 7. WVTR (Water Vapor Transmission Rate) evaluation

A WVTR (Water Vapor Transmission Rate) of a case was evaluated according to ASTM F1249 standard under conditions of 38°C and 100% relative humidity.

### 8. Melting point evaluation

A melting point of a hot melt film applied to manufacture of a fire extinguishing devices was evaluated using a DSC (Differential Scanning Calorimeter) equipment (TA instrument, Q200 model). The temperature section upon the evaluation was set from 25°C to 300°C. The left on-set point and the right on-set point of the endothermic peak section identified while increasing the temperature from 25°C to 300°C at a rate of about 10°C/min were designated as the start and end of the phase transition, and the temperature of the maximum peak of the relevant section was set as the melting point.

### 9. CRC (Centrifuge Retention Capacity)

A CRC was measured according to EDANA WSP 241.3. About 0.2 g (W0) of a water-absorbing polymer was placed in a nonwoven envelope, sealed, and then submerged in a physiological saline solution at room temperature. As the physiological saline solution, an aqueous NaCl solution with a concentration of 0.9 wt% was used. The state was maintained for 30 minutes or so, moisture was removed from the envelope for 3 minutes at a condition of 250 G using a centrifuge, and then the mass (g, W2) of the envelope was measured.
The same operation was performed on the same nonwoven envelope without any water-absorbing polymer, and the mass (g, W1) was measured.
The CRC (g/g) was calculated by substituting the measurement results into Equation A below.
The evaluation was conducted under a constant temperature and humidity condition (23 ± 1°C, relative humidity: 50 ± 10%).

[Equation A]

$$CRC\ (g/g) = \{[W2(g) - W1(g)]/W0(g)\} - 1$$

### 10. AUP (Absorption Under Pressure)

An AUP was measured according to EDANA method WSP 242.3. A 400-mesh stainless steel wire net was mounted on the bottom of a plastic cylinder with an inner diameter of about 60 mm, and 0.0 g (W0) (0.90 g) of a water-absorbing polymer was evenly sprayed on the wire net, and then a piston capable of evenly imparting a load of 0.3 psi was installed thereon. The piston was slightly smaller than an outer diameter of 60 mm, had no gap with the inner wall of the cylinder, and was installed so that it could move up and down. The weight (g, W3) of the device was measured.
A glass filter with a diameter and a thickness of 90 mm and 5 mm, respectively, was placed inside a Petro dish with a diameter of 150 mm, and a physiological saline solution was added so that it was at the same level as the upper surface of the glass filter. As the physiological saline solution, an aqueous NaCl solution with a concentration of 0.9 wt% was used. One sheet of filter paper with a diameter of 90mm was placed thereon. The measuring device was placed on the filter paper, and the physiological saline solution was absorbed for 1 hour under a load of 0.3 psi. Thereafter, the measuring device was lifted, and its weight (g, W4) was measured.

The AUP (g/g) was evaluated by substituting the obtained values into Equation B below.

The evaluation was conducted under a constant temperature and humidity condition (23 $\pm$ 1°C, relative humidity: 50 $\pm$ 10%).

$$[\text{Equation B}]$$

$$AUP(g/g) = [W4(g) - W3(g)]/W0(g)$$

### 11. Thermal decomposition temperature

A thermal decomposition temperature was identified by TGA (Thermogravimetric Analysis). Using Mettler-Toledo's TGA e850 equipment, a temperature of a sample was increased from about 20°C at a rate of 5°C/min in an N2 flow atmosphere, and simultaneously the point where the weight loss was 5% or more was defined as the thermal decomposition temperature.

### 12. Flammability evaluation

Flammability of a freezing point adjuster was evaluated according to ASTM D93 standard. A sample (ignition source) was placed in a 100 mL brass test cup in an amount of about 90 vol% or so of the cup, stirred at about 100 times/min, and a diameter of the ignition source was set to about 3.2 mm to 4.8 mm, whereby a flash point was evaluated while increasing the temperature at a rate of 5°C/min.

Upon the evaluation, in the case where the sample was not ignited but vaporized, the sample without any flash point or having a flash point of 120°C or more was evaluated as PASS, and in the case where it was ignited, the temperature at the time of ignition was set as the flash point, whereby it was evaluated as NG.

### 13. Evaluation of toxic gas generation

Generation of toxic gas was evaluated using length-of-stain colorimetric dosimeters according to ASTM D4599-21 standard. The length-of-stain colorimetric dosimeters are tubes that can measure concentrations according to colors, and the measurement tube is designated for each toxic gas. A gas sample generated from a target substance was collected for about 1 minute or so and quantified. After the sample was injected into the open end of the length-of-stain colorimetric dosimeters using a 100 ml syringe, and then maintained for 8 hours or so, the concentration was measured for each gas. The toxic gases measured using the method were chlorine gas, ammonia gas, and hydrofluoric acid gas.

### 14. Presence of ignition quality

A fire extinguishing composition was placed in an aluminum can, and an ignition quality was evaluated. As the aluminum can, one manufactured in the form of an envelope with an open top using an aluminum foil with a thickness of about 3 mm or so was used. The horizontal and vertical lengths of the can were 9 cm and 12 cm or so, respectively, and the internal volume was about 32.4 cm$^3$ or so.

The fire extinguishing composition was filled inside the can, and a flame was applied vertically at an interval of about 1 inch or so to one surface of the side surfaces of the can in a state where the top of the can was opened. The flame was applied using butane gas (can type butane gas with a capacity of 220 g (unused product)) and a torch.

While applying the flame for 5 minutes or so, it was observed whether the flame occurred at the open top, where if it did not occur, it was evaluated as PASS, and if it did occur, it was evaluated as NG.

### Example 1.

### Preparation of fire extinguishing composition

Water (W), monobasic ammonium phosphate (N) ($NH_4H_2PO_4$) (DAEJUNG Chemicals & Metals) (molar mass: 115.0257 g/mol), and potassium formate (F) (HCOOK) (DAEJUNG Chemicals & Metals) (molar mass 84.12 g/mol) were mixed in a weight ratio (W: N: F) of 100:20:30 to prepare a first mixture. The mixing was performed at room temperature (about 25°C) under a mixing condition of 300 rpm for 10 minutes or so.

The potassium formate is a non-flammable substance without any flash point, and is a non-toxic substance, wherein all the concentrations of chlorine gas, ammonia gas, and hydrofluoric acid gas measured according to a toxic gas evaluation method are 0 ppm. In addition, the solubility of the potassium formate in 100 g of water at 0°C is about 32.8 g, and the solubility in 100 g of water at 25°C is about 331 g.

The solubility of the monobasic ammonium phosphate (N) ($NH_4H_2PO_4$) in 100 g of water at 25°C is about 29 g or so. Subsequently, starch (S) (Sigma-Aldrich) and melamine (M) (ACROS ORGANICS) were additionally mixed into the first mixture to prepare a second mixture. In the second mixture, the ratio of water (W) and the starch (S) and melamine (M) (W:S:M) was adjusted to 100:10:10 or so. The mixing was performed at room temperature (about 25°C) under a mixing condition of 300 rpm for 30 minutes or so. Upon the manufacture of the second mixture, corn starch was used as the starch, wherein starch having a weight average molecular weight of about 51,000,000 g/mol or so and a weight ratio (amylose: amylopectin) of amylose and amylopectin of about 25:75 or so was used. Subsequently, a water-absorbing polymer (SAP) was additionally mixed into the second mixture to prepare a composition. The mixing of the water-absorbing polymer was performed by mixing the second mixture and the water-absorbing polymer, and mixing them at room temperature (about 25°C) under a mixing condition of 300 rpm for 2 hours or so. The mixing was performed so that the weight ratio (W: P) of the water (W) and the water-absorbing polymer (P) of the mixture was about 100:5 or so. As the water-absorbing polymer, LG Chemical's SAP GS-803ND product was used, which was applied to a size of about 150 $\mu$m or so through pulverizing and classification processes. The CRC (Centrifuge Retention Capacity) of such a water-absorbing polymers was about 33.5 g/g or so, and the AUP (Absorption Under Pressure) was about 28.1 g/g or so.

**Fire extinguishing device**

The fire extinguishing composition was placed inside a can (case) made of an aluminum material used in the manufacture of rectangular batteries, and the portion in an open state was sealed to manufacture a fire extinguishing device. The WVTR of the can used for the rectangular battery was about 0 g/m$^2$·day or so.

As shown in Figure 4, the fire extinguishing composition was injected into the inside of the can (1001), and then the cover (1002) was covered to manufacture a fire extinguishing device. Upon the manufacture of the fire extinguishing device, the composition was injected so that the composition filled at least 90% of the volume of the empty space inside the can. As the can for the rectangular battery, the can having a width of 9cm, a length of 12cm, and a thickness of 3cm was used.

**Example 2.**

A fire extinguishing composition and a fire extinguishing device were each prepared in the same manner as in Example 1, except that sodium formate (HCOONa) (DAEMYUNG Chemical) (molar mass: 68.01 g/mol) was used instead of potassium formate (HCOOK) (DAEJUNG Chemicals & Metals).

The sodium formate is a non-flammable substance without any flash point, and is a non-toxic substance, wherein all the concentrations of chlorine gas, ammonia gas, and hydrofluoric acid gas measured according to a toxic gas evaluation method are 0 ppm. In addition, the solubility of the sodium formate in 100 g of water at 0°C is about 43.82 g, and the solubility in 100 g of water at 25°C is about 97.2 g.

**Example 3.**

A fire extinguishing composition and a fire extinguishing device were each prepared in the same manner as in Example 1, except that potassium acetate ($CH_3COOK$) (DAEJUNG Chemicals & Metals) (molar mass: 98.15 g/mol) was used instead of potassium formate (HCOOK) (DAEJUNG Chemicals & Metals) upon preparing the fire extinguishing composition.

The potassium acetate is a non-flammable substance without any flash point, and is a non-toxic substance, wherein all the concentrations of chlorine gas, ammonia gas, and hydrofluoric acid gas measured according to a toxic gas evaluation method are 0 ppm. In addition, the solubility of the potassium acetate in 100 g of water at 0°C is about 216 g, and the solubility in 100 g of water at 25°C is about 268.6 g.

**Example 4.**

**Preparation of fire extinguishing composition**

Water (tap water) (W), monobasic ammonium phosphate (N) ($NH_4H_2PO_4$) (DAEJUNG Chemicals & Metals, and potassium acetate ($CH_3COOK$) (DAEJUNG Chemicals & Metals) (molar mass 98.15 g/mol) (F) were mixed in a weight ratio (W: N: F) of 160:15:90 to prepare a first mixture. The mixing was performed at room temperature (about 25°C) under a mixing condition of 300 rpm for 10 minutes or so.

The potassium acetate was a non-flammable substance without any flash point, and was a non-toxic substance, wherein all the concentrations of chlorine gas, ammonia gas, and hydrofluoric acid gas measured according to a toxic gas evaluation method were 0 ppm. In addition, the solubility of the potassium acetate in 100 g of water at 0°C is about 216 g, and the solubility in 100 g of water at 25°C is about 268.6 g.

The monobasic ammonium phosphate (N) ($NH_4H_2PO_4$) was the same as in Example 1. Subsequently, starch (S) (the same as that used in Example 1) was additionally mixed into the first mixture to prepare a fire extinguishing composition. In the second mixture, the ratio (W: S) of the water (W) and the starch (S) was adjusted to 160:3 or so. The mixing was performed for 30 minutes or so at room temperature (about 25°C) under a mixing condition of 300 rpm.

Subsequently, the fire extinguishing composition was supported on a porous film. As the porous film, glass wool (thickness: about 2.5 mm, density: about 0.03 g/cm³, thermal decomposition temperature: about 400°C) (Glass wool blanket, Rosewool) was used.

**Fire extinguishing device**

A fire extinguishing device was manufactured in the same manner as in Example 1, except that the glass wool supported with the fire extinguishing composition was used instead of the fire extinguishing composition. At this time, the fire extinguishing composition and the glass wool supported with the composition filled at least 90% of the volume of the empty space inside the can.

**Comparative Example 1.**

A fire extinguishing composition and a fire extinguishing device were each prepared in the same manner as in Example 1, except that ethylene glycol (DAEJUNG Chemicals & Metals) (molar mass: 62.07 g/mol) was used instead of potassium formate (HCOOK) (DAEJUNG Chemicals & Metals) upon preparing the fire extinguishing composition.

The ethylene glycol is a flammable substance with a flash point of about 111°C or so, and is a non-toxic substance, wherein all the concentrations of chlorine gas, ammonia gas, and hydrofluoric acid gas measured according to a toxic gas evaluation method are 0 ppm.

**Comparative Example 2.**

A fire extinguishing composition and a fire extinguishing device were each prepared in the same manner as in Example 1, except that $CaCl_2$ (DAEJUNG Chemicals & Metals) (molar mass: 110.98 g/mol) was used instead of potassium formate (HCOOK) (DAEJUNG Chemicals & Metals) upon preparing the fire extinguishing composition.

The $CaCl_2$ is a non-flammable substance without any flash point, and is a toxic substance, wherein the concentration of chlorine gas measured according to a toxic gas evaluation method is 0.001 ppm, and the concentrations of ammonia gas and hydrofluoric acid gas are each 0 ppm. In addition, the solubility of the $CaCl_2$ in 100 g of water at 0°C is about 59.5 g, and the solubility in 100 g of water at 25°C is about 74.5 g.

**Comparative Example 3.**

A fire extinguishing composition and a fire extinguishing device were each prepared in the same manner as in Example 1, except that xylitol (DAEJUNG Chemicals & Metals) (molar mass: 152.15 g/mol) was used instead of potassium formate (HCOOK) (DAEJUNG Chemicals & Metals) upon preparing the fire extinguishing composition, and the weight ratio (W: F) of the water (W) and the xylitol (F) was set to 100: 15.

The xylitol is a non-flammable substance without any flash point, and is a non-toxic substance, wherein all the concentrations of chlorine gas, ammonia gas, and hydrofluoric acid gas measured according to a toxic gas evaluation method are 0 ppm. In addition, the solubility of the xylitol in 100 g of water at 0°C is about 10 g, and the solubility in 100 g of water at 25°C is about 10 g.

**Comparative Example 4.**

A fire extinguishing composition and a fire extinguishing device were each prepared in the same manner as in Example 1, except that $Al_2(SO_4)_3$ (DAEMYUNG Chemical) (molar mass: about 342.14 g/mol) was used instead of potassium formate (HCOOK) (DAEJUNG Chemicals & Metals) upon preparing the fire extinguishing composition.

The $Al_2(SO_4)_3$ is a non-flammable substance without any flash point, and is a non-toxic substance, wherein all the concentrations of chlorine gas, ammonia gas, and hydrofluoric acid gas measured according to a toxic gas evaluation method are 0 ppm. In addition, the solubility of the $Al_2(SO_4)_3$ in 100 g of water at 0°C is about 31.2 g, and the solubility in 100 g of water at 25°C is about 36.4 g.

The evaluation results for the fire extinguishing devices were described in Tables 1 and 2 below.

In Tables 1 and 2 below, the ignition quality is the result according to the "14. Presence of ignition quality" evaluation, and the toxicity is the result of evaluating the gas generated according to the "13. Evaluation of toxic gas generation" and its concentration. If the relevant space is blank, it means that there is no generation of toxic gas evaluated according to the evaluation method.

In Tables 1 and 2 below, $\Delta T1$ is a value obtained by calculating it with the equation $1.86 \times M1 \times I$ for all ionic compounds in the fire extinguishing composition (M1 is the molal concentration of each ionic compound to water, and I is the number of moles of ions generated when 1 mole of the ionic compound has been completely dissociated), $\Delta T2$ is a value obtained by calculating it with the equation $1.86 \times M2 \times I$ for ionic compounds having solubility of 75 g or more in water at 25°C among ionic compounds in the fire extinguishing composition (M2 is the molal concentration of each ionic compound to water, and I is the number of moles of ions generated when 1 mole of the ionic compound has been completely dissociated), and $\Delta T3$ is a value obtained by calculating it with the equation $1.86 \times M3$ for alcohols (ethylene glycol and xylitol) in the fire extinguishing composition (M3 is the molal concentration of the alcohol to water).

[Table 1]

|  | Example | | | |
|---|---|---|---|---|
|  | 1 | 2 | 3 | 4 |
| Composition freezing point (°C) | -26 | -30.4 | -23 | -24.35 |
| $\Delta T1$ | 19.73 | 22.88 | 17.84 | 24.35 |
| $\Delta T2$ | 13.27 | 16.41 | 11.37 | 21.32 |
| $\Delta T3$ | 0 | 0 | 0 | 0 |
| Convection test | PASS | PASS | PASS | PASS |
| Chain ignition test | PASS | PASS | PASS | PASS |
| Ignition quality | PASS | PASS | PASS | PASS |
| Toxicity | - | - | - | - |

[Table 2]

|  | Comparative Example | | | |
|---|---|---|---|---|
|  | 1 | 2 | 3 | 4 |
| Composition freezing point (°C) | -26 | -29 | -13 | -18 |
| $\Delta T1$ | 6.47 | 21.55 | 6.47 | 14.62 |
| $\Delta T2$ | 0 | 15.08 | 0 | 8.15 |
| $\Delta T3$ | 8.99 | 0 | 1.83 | 0 |
| Convection test | NG | PASS | NG | NG |
| Chain ignition test | NG | PASS | NG | NG |
| Ignition quality | NG | PASS | NG | PASS |
| Toxicity | - | Chlorine gas 0.001ppm | - | - |

**Example 5**

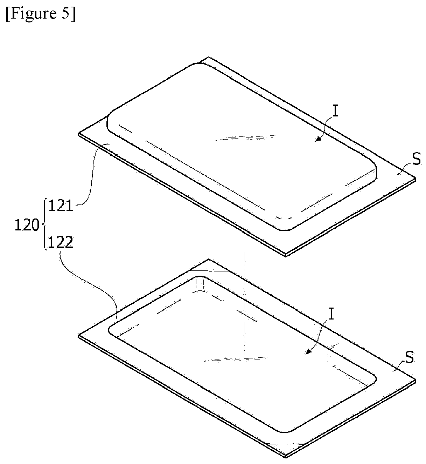

A fire extinguishing device was manufactured in the same manner as in Example 1, except that a pouch was used instead of the can. The pouch was manufactured by laminating a PET (poly(ethylene terephthalate)) film (thickness: about 10 μm), an aluminum foil (thickness: about 20 μm), and a PP (polypropylene) hot melt film (thickness: about 70 μm) in the above order. The PET film was laminated on one side of the aluminum foil with an adhesive, and the PP hot melt film was laminated on the other side at a temperature of about 200°C to manufacture an outer shell. A film having a melting point of about 140°C or so was used as the PP hot melt film. As shown in Figure 5, a concave portion (I) was formed in the central portion of the outer shell to prepare an upper outer shell (121) and a lower outer shell (122), respectively. The fire extinguishing composition was placed in the concave portion (I) between the upper and lower outer shells (121, 122), and the PP hot melt film was fused to each other at a temperature of about 200°C in the sealing portion (S), thereby manufacturing a fire extinguishing device. Thereafter, three of the four sealing portions (S) were folded so that the unfolded sealing portion could act as a vent region. Here, the composition was injected to occupy at least 90% of the volume of the sealed space formed by the concave portion (I). The WVTR of the case was about 0 g/m²·day or so. The case was manufactured to have a width of 9cm, a length of 12cm or so, and a thickness of 3cm or so.

**Example 6**

A fire extinguishing device was manufactured in the same manner as in Example 2, except that the pouch manufactured in Example 5 was used instead of the can.

**Example 7**

A fire extinguishing device was manufactured in the same manner as in Example 3, except that the pouch of Example 5 was used instead of the can.

**Example 8**

A fire extinguishing device was manufactured in the same manner as in Example 4, except that the pouch of Example 5 was used instead of the can.

**Comparative Example 5**

A fire extinguishing device was manufactured in the same manner as in Comparative Example 1, except that the pouch of Example 5 was used instead of the can.

**Comparative Example 6**

A fire extinguishing device was manufactured in the same manner as in Comparative Example 2, except that the pouch of Example 5 was used instead of the can.

**Comparative Example 7**

A fire extinguishing device was manufactured in the same manner as in Comparative Example 3, except that the pouch type of Example 5 was used instead of the can.

**Comparative Example 8**

A fire extinguishing device was manufactured in the same manner as in Comparative Example 4, except that the pouch of Example 5 was used instead of the can.

The evaluation results for the fire extinguishing devices were described in Tables 3 and 4 below.

In Tables 3 and 4 below, the meanings of ignition quality, toxicity, $\Delta T1$, $\Delta T2$, and $\Delta T3$ are as in Tables 1 and 2.

[Table 3]

|  | Example | | | |
|---|---|---|---|---|
|  | 5 | 6 | 7 | 8 |
| Composition freezing point (°C) | -26 | -30.4 | -23 | -24.35 |
| $\Delta T1$ | 19.73 | 22.88 | 17.84 | 24.35 |
| $\Delta T2$ | 13.27 | 16.41 | 11.37 | 21.32 |
| $\Delta T3$ | 0 | 0 | 0 | 0 |
| Convection test | PASS | PASS | PASS | PASS |
| Chain ignition test | PASS | PASS | PASS | PASS |
| Ignition quality | PASS | PASS | PASS | PASS |
| Toxicity | - | - | - | - |

**EP 4 631 582 A1**

[Table 4]

|  | Comparative Example | | | |
|---|---|---|---|---|
|  | 5 | 6 | 7 | 8 |
| Composition freezing point (°C) | -26 | -29 | -13 | -18 |
| $\Delta T1$ | 6.47 | 21.55 | 6.47 | 14.62 |
| $\Delta T2$ | 0 | 15.08 | 0 | 8.15 |
| $\Delta T3$ | 8.99 | 0 | 1.83 | 0 |
| Convection test | NG | PASS | NG | NG |
| Chain ignition test | NG | PASS | NG | NG |
| Ignition quality | NG | PASS | NG | PASS |
| Toxicity | - | Chlorine gas 0.001ppm | - | - |

## Claims

1.  A composition comprising:

    a solvent with a freezing point of -10°C or more under 1 atm; and
    ionic compounds which have solubility of 75 g or more in water at 25°C, and are non-flammable or have a flash
    point of 120°C or more, wherein
    $\Delta T1$ of Equation 1 below is in a range of 5 to 40, and
    a ratio of $\Delta T2$ of Equation 2 below to $\Delta T1$ above, $\Delta T2/\Delta T1$, is 0.4 or more:

    [Equation 1]

    $$\Delta T1 = 1.86 \times M1 \times I1$$

    [Equation 2]

    $$\Delta T2 = 1.86 \times M2 \times I2$$

    wherein, M1 is the molal concentration of all ionic compounds included in the composition to the solvent, I1 is the
    number of moles of ions generated by dissociation of 1 mole of the ionic compounds with the molal concentration
    M1, M2 is the molal concentration of the ionic compound being non-flammable or having a flash point of 120°C or
    more included in the composition to the solvent, and I2 is the number of moles of ions generated by dissociation of
    1 mole of the ionic compound with the molal concentration M2.

2.  The composition according to claim 1, wherein $\Delta T2$ is in a range of 5 to 38.

3.  The composition according to claim 1 or 2, wherein $\Delta T3$ of Equation 3 below is 7 or less:

    [Equation 3]

    $$\Delta T3 = 1.86 \times M3$$

    wherein, M3 is the molal concentration of all alcohols included in the composition to the solvent.

4.  The composition according to any one of claims 1 to 3, wherein the solvent has a boiling point in a range of 80°C to
    120°C.

5.  The composition according to any one of claims 1 to 4, wherein the solvent is water.

6. The composition according to any one of claims 1 to 5, wherein the solvent has a content of 40 wt% or more.

7. The composition according to any one of claims 1 to 6, wherein the ionic compound being non-flammable or having a flash point of 120°C or more has solubility of 20 g or more in 100 g of water at 0°C.

8. The composition according to any one of claims 1 to 7, wherein the ionic compound being non-flammable or having a flash point of 120°C or more has solubility of 80 g or more in 100 g of water at 25°C.

9. The composition according to any one of claims 1 to 8, wherein the ionic compound being non-flammable or having a flash point of 120°C or more has a molar mass of 300 g/mol or less.

10. The composition according to any one of claims 1 to 9, wherein the ionic compound being non-flammable or having a flash point of 120°C or more is one or more selected from the group consisting of formate, acetate, carbonate, and sulfate.

11. The composition according to any one of claims 1 to 10, further comprising phosphoric acid, phosphate, a phosphonate compound, or a phosphate compound.

12. The composition according to any one of claims 1 to 11, further comprising a carbonizable organic material.

13. The composition according to claim 12, wherein the carbonizable organic material is a polysaccharide, a polyhydric alcohol, cellulose, lignin, BSPPO, a carbonizable polymer, or a melamine compound.

14. The composition according to any one of claims 1 to 13, further comprising a water-absorbing polymer.

15. The composition according to any one of claims 1 to 14, further comprising a buffer.

16. A fire extinguishing device comprising:

   a case; and
   the composition of any one of claims 1 to 15 present within the case.

17. The fire extinguishing device according to claim 16, wherein the case has a WVTR (Water Vapor Transmission Rate) of 0.5 $g/m^2 \cdot$day or less.

18. The fire extinguishing device according to claim 16 or 17, wherein the composition occupies 70% or more of the volume inside the case.

[Figure 1]

[Figure 2]

[Figure 3]

[Figure 4]

[Figure 5]

## INTERNATIONAL SEARCH REPORT

| International application No. |
| --- |
| **PCT/KR2024/007688** |

| A. | CLASSIFICATION OF SUBJECT MATTER |
| --- | --- |

**A62D 1/00**(2006.01)i; **A62D 1/06**(2006.01)i; **A62C 35/02**(2006.01)i; **A62C 3/16**(2006.01)i; **H01M 50/24**(2021.01)i; **H01M 50/204**(2021.01)i

According to International Patent Classification (IPC) or to both national classification and IPC

| B. | FIELDS SEARCHED |
| --- | --- |

Minimum documentation searched (classification system followed by classification symbols)

A62D 1/00(2006.01); A62D 1/06(2006.01); B32B 27/06(2006.01); C09K 3/00(2006.01); H01M 2/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이온성 화합물(ionic compound), 비인화성(nonflammable), 용해도 (solubility), 이온(ion), 비율(ratio), 화재(fire), 소화(extinguishment), 배터리(battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0075792 A (KOREAN FIRE PROTECTION ASSOCIATION) 31 May 2023 (2023-05-31)<br>See paragraphs [0037]-[0038] and [0061]; claim 1; and tables 1 and 6. | 1-3 |
| Y | YUAN, Shuai et al. A review of fire-extinguishing agent on suppressing lithium-ion batteries fire. Journal of Energy Chemistry. 26 March 2021 (online publication date), vol. 62, pp. 262-280.<br>See abstract; and figures 7 and 11. | 1-3 |
| A | CN 115738159 A (JINXI RAILWAY VEHICLE CO., LTD.) 07 March 2023 (2023-03-07)<br>See entire document. | 1-3 |
| A | CN 105140427 A (THE SECOND RESEARCH INSTITUTE OF CIVIL AVIATION ADMINISTRATION OF CHINA) 09 December 2015 (2015-12-09)<br>See entire document. | 1-3 |
| A | JP 2010-119754 A (TAKASE, Kazuo et al.) 03 June 2010 (2010-06-03)<br>See entire document. | 1-3 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 September 2024** | **13 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/007688** |

| **Box No. II**    **Observations where certain claims were found unsearchable (Continuation of item 2 of first sheet)** |
|---|

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **13,17**
   because they relate to parts of the international application that do not comply with the prescribed requirements to such an extent that no meaningful international search can be carried out, specifically:

   Claims 13 and 17 refer to claims violating the manner of referring to dependent claims (PCT Rule 6.4(a)), and thus are unclear.

3. ☑ Claims Nos.: **4-12,14-16,18**
   because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 10-2023-0075792 | A | 31 May 2023 | None | | | |
| CN | 115738159 | A | 07 March 2023 | None | | | |
| CN | 105140427 | A | 09 December 2015 | CN | 105140427 | B | 08 January 2019 |
| JP | 2010-119754 | A | 03 June 2010 | JP | 5261751 | B2 | 14 August 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230072165


**Non-patent literature cited in the description**

- *Potato Research*, 1988, vol. 31, 241-246